# EUROPEAN PATENT APPLICATION

(11) **EP 3 358 750 A1**
(43) Date of publication of application: **08.08.2018**
(21) Application number: 16851643.3
(22) Date of filing: 28.09.2016
(51) Int. Cl.: H04B 1/3816, F24F 11/02

(54) **IC CARTRIDGE AND ENVIRONMENT ADJUSTING DEVICE**

(30) Priority: 30.09.2015 JP 2015195386
(71) Applicant: Daikin Industries, Ltd., Osaka-shi, Osaka 530-8323 (JP)
(72) Inventor: MATSUHARA, Hiroyuki, Osaka 530-8323 (JP); IKEDA, Makoto, Osaka 530-8323 (JP)
(74) Representative: Hoffmann Eitle
(86) International application number: PCT/JP2016/078643
(87) International publication number: WO 2017/057472

(57) **Abstract**

An IC cartridge is provided that is capable of inexpensively and safely adding a wireless function to an environment adjusting device. An IC cartridge (200) is configured such that an insulating case (210) is housed in an air conditioner (1) and supported by the air conditioner (1) as a result of connection terminals (203) being inserted into a connector (150). Additionally, the IC cartridge (200) is configured such that the insulating case (210) separates from the air conditioner (1) as a result of the connection terminals (203) being removed from the connector (150).

## Description

### TECHNICAL FIELD

The present invention relates to an IC cartridge for adding a wireless function, and to an environment adjusting device for adjusting an indoor environment, the device including the IC cartridge.

### BACKGROUND ART

In the past, environment adjusting devices that adjust indoor environments have been developed that are capable of exchanging, over a network, information necessary to control indoor living environments. This has been accomplished by connecting an environment adjusting device such as an air conditioner to a network. For example, Patent Literature 1 (Japanese Patent Application Publication No. 2014-31957) describes an air conditioner that connects to a network, such as the internet, using a wireless adapter. In Patent Literature 1, the wireless adapter is externally installed in the air conditioner. However, the control device of the air conditioner is stored in an electrical component box inside the indoor unit. Consequently, to connect the external wireless adapter to the control device, it is necessary to open the indoor unit and connect the external wireless adapter to the control device inside the electrical component box. Consequently, installation work is complicated when an external wireless adapter is used and the external wireless adapter itself must have a safe structure. Accordingly, technology such as that described in Patent Literature 2 (Japanese Patent Application Publication No. 2015-31480) has been proposed in which the wireless adapter is housed in the air conditioner. In addition, technology such as that described in Patent Literature 3 (Japanese Patent Application Publication No. 2014-120964) has been proposed in which a wireless communication unit is incorporated in the electrical component box.

### SUMMARY OF THE INVENTION

### <Technical Problem>

However, when the wireless adapter or the wireless communication unit is housed in the air conditioner as described in Patent Literatures 2 and 3, not only is the price of the wireless adapter or similar device added, but each model of the air conditioner must receive certification in accordance with the wireless regulations of each country where the air conditioner is to be used, which results in further increases in cost.

Thus, an object of the present invention is to provide an IC cartridge capable of inexpensively and safely adding a wireless function to an environment adjusting device. Another object of the present invention is to provide an environment adjusting device to which a wireless function can be inexpensively and safely added.

### <Solutions to Problem>

An IC cartridge according to a first aspect of the present invention is configured to add a wireless function by being attached to a connector of an environment adjusting device configured to adjust an indoor environment. The IC cartridge includes an antenna configured to send and receive wireless communication radio waves used to send and receive information used to adjust the indoor environment; a wireless IC chip configured to send and receive electrical signals to and from the antenna in order to send and receive radio waves via the antenna; connection terminals arranged and configured to be capable of insertion into and removal from the connector, the connection terminals being configured to circuit connect the connector to the wireless IC chip; and an insulating case covering an entirety of an electric circuit, including the wireless IC chip and the antenna but excluding the connection terminals. The IC cartridge is configured such that the insulating case is housed in the environment adjusting device and supported by the environment adjusting device as a result of the connection terminals being inserted into the connector, and the insulating case is separated from the environment adjusting device as a result of the connection terminals being removed from the connector.

With this IC cartridge, the insulating case covers the entirety of the electric circuit, including the wireless IC chip and the antenna, with the exception of the connection terminals. As such, when a worker grasps the IC cartridge by hand and inserts or removes the connection terminals into or from the connector, the hand of the worker will not contact the electric circuit after the connection terminals have been connected to the connector. As a result, the IC cartridge can be safely handled. Additionally, the insulating case is supported by the environment adjusting device as a result of the connection terminals being inserted into the connector, and the insulating case is separated from the environment adjusting device as a result of the connection terminals being removed from the connector. Therefore, work involved in installing and removing the IC cartridge is facilitated, thereby eliminating the work involved in adding the wireless function and, as a result, it is not necessary for the wireless adapter to be built in. Furthermore, in some cases, the need to receive wireless certification for the environment control device may be eliminated, and only wireless certification for the IC cartridge may be required. Thus, the wireless function can be inexpensively added to the environment adjusting device.

An IC cartridge according to a second aspect of the present invention is the IC cartridge according to the first aspect, wherein the insulating case includes an insulating structure configured to extend a creepage distance around a periphery of the electric circuit.

With this IC cartridge, the insulating structure of the insulating case extends the creepage distance around the periphery of the electric circuit. As a result, sufficient insulation of the electric circuit can be secured by the insulating case.

An IC cartridge according to a third aspect of the present invention is the IC cartridge according to the second aspect, wherein the insulating case has a first edge portion where the connection terminals are disposed, and a second edge portion opposite the first edge portion, and the insulating case includes an uneven structure on at least an inner surface between an edge of the second edge portion and the electric circuit. In this case, the uneven structure is the insulating structure.

With this IC cartridge, the electric circuit and the edge of the second edge portion of the insulating case are separated by the insulating structure constituted by the uneven structure. As a result, a distance between the electric circuit and the edge of the second edge portion can be appropriately set and sufficient insulation can be secured between the electric circuit and the edge of the second edge portion.

An IC cartridge according a fourth aspect of the present invention is the IC cartridge according to the third aspect, wherein the antenna extends to a location proximal to the second edge portion, in a circuit region where the electric circuit is formed.

With this IC cartridge, the antenna extends to the location proximal to the second edge portion, which is separated from the first edge portion where the connection terminals are disposed. As a result, the antenna can be disposed separated from the connector and metal portions near the connector.

An environment adjusting device according to a fifth aspect of the present invention includes a main body casing, a connector provided in the main body casing, and an IC cartridge. The IC cartridge includes an antenna configured to send and receive wireless communication radio waves used to send and receive information used to adjust an indoor environment, a wireless IC chip configured to send and receive electrical signals to and from the antenna in order to send and receive radio waves via the antenna, connection terminals as arranged and configured to be capable of insertion into and removal from the connector, the connection terminals being configured to circuit connect the connector to the wireless IC chip, and an insulating case covering an entirety of an electric circuit, including the wireless IC chip and the antenna but excluding the connection terminals. The environment adjusting device is configured such that the insulating case is housed in the main body and supported by the main body casing as a result of the connection terminals being inserted into the connector, and the insulating case is separated from the main body casing as a result of the connection terminals being removed from the connector.

With this environment adjusting device, the insulating case of the IC cartridge covers the entirety of the electric circuit, including the wireless IC chip and the antenna but excluding the connection terminals. As such, when a worker grasps the IC cartridge by hand and inserts or removes the connection terminals into or from the connector of the environment adjusting device, the hand of the worker will not contact the electric circuit after the connection terminals have been connected to the connector. As a result, the IC cartridge can be safely handled. Additionally, the insulating case is supported by the environment adjusting device as a result of the connection terminals of the IC cartridge being inserted into the connector, and the insulating case is separated from the environment adjusting device as a result of the connection terminals being removed from the connector. Therefore, work involved in installing and removing the IC cartridge is facilitated, thereby eliminating the work involved in adding the wireless function and, as a result, it is not necessary for the wireless adapter to be built in. Furthermore, in some cases, the need to receive wireless certification for each model of the environment adjusting device may be eliminated, and only wireless certification for each IC cartridge may be required. Thus, the wireless function can be inexpensively added to the environment adjusting device.

An environment adjusting device according to a sixth aspect of the present invention is the environment adjusting device according to the fifth aspect, further including an electrical component section provided in the main body casing, a plurality of electrical components being installed in the electrical component section. In this case, at least a part of the plurality of electrical components that constitutes switch functions, display functions, and power supply functions of a wireless adapter that adds a wireless function is disposed in the electrical component section. Additionally, while the IC cartridge is inserted into the connector, the IC cartridge is circuit connected to the electrical component section, and the IC cartridge and the electrical component section cooperate to demonstrate functions of the wireless adapter.

With this environment adjusting device, the at least a part of the plurality of electrical components that constitutes the switch functions, the display functions, and the power supply functions of the wireless adapter is disposed in the electrical component section. As a result, the number of electrical components of the IC cartridge can be reduced and the IC cartridge can be simplified and miniaturized.

An environment adjusting device according to a seventh aspect of the present invention is the environment adjusting device according to the fifth aspect or the sixth aspect, further including an electrical component section provided in the main body casing, the plurality of electrical components being installed in the electrical component section, and a remote controller configured to be capable of sending and receiving data to and from the electrical component section. In this case, at least a part of the plurality of electrical components that constitutes switch functions and display functions of a wireless adapter that adds a wireless function is disposed in the remote controller. Additionally, while the IC cartridge is inserted into the connector, the IC cartridge is circuit connected to the electrical component section, and the IC cartridge, the electrical component section, and the remote controller cooperate to demonstrate functions of the wireless adapter.

With this environment adjusting device, the at least a part of the plurality of electrical components that constitutes the switch functions and the display functions of the wireless adapter is disposed in the remote controller. As a result, the number of electrical components of the IC cartridge can be reduced and the IC cartridge can be simplified and miniaturized.

An environment adjusting device according to an eighth aspect of the present invention is the environment adjusting device according to any one of the fifth aspect to the seventh aspect, further including an electrical component section provided in the main body casing, the plurality of electrical components being installed in the electrical component section. In this case, the IC cartridge is configured to be capable of sending and receiving data to and from a smartphone, and the at least a part of the plurality of electrical components that constitutes switch functions and display functions of a wireless adapter that adds a wireless function is disposed in the smartphone. Additionally, while the IC cartridge is inserted into the connector, the IC cartridge is circuit connected to the electrical component section, and the IC cartridge, the electrical component section, and the smartphone cooperate to demonstrate functions of the wireless adapter.

With this environment adjusting device, the at least a part of the plurality of electrical components that constitutes the switch functions and the display functions of the wireless adapter is disposed in the smartphone. As a result, the number of electrical components of the IC cartridge can be reduced and the IC cartridge can be simplified and miniaturized.

An environment adjusting device according to a ninth aspect of the present invention is the environment adjusting device according to any one of the fifth aspect to the eighth aspect, further including a metal member disposed in the main body casing. In this case, the connector is disposed at a location such that, while the IC cartridge is inserted into the connector, a distance from the antenna to the metal member is at least 20 mm.

With this environment adjusting device, while the IC cartridge is inserted into the connector, the distance from the antenna to the metal member is at least 20 mm. As a result, it is possible to sufficiently reduce influences of the metal member on the radio waves sent and received by the antenna.

### <Advantageous Effects of Invention>

With the IC cartridge according to the first aspect of the present invention, the wireless function can be inexpensively and safely added to the environment adjusting device.

With the IC cartridge according to the second aspect of the present invention, safety, when a worker grasps or pushes the insulating case by hand, can be improved when inserting or removing the IC cartridge into or from the environment adjusting device.

With the IC cartridge according to the third aspect of the present invention, safety, when a worker grasps or pushes the second edge portion by hand, can be secured.

With the IC cartridge according to the fourth aspect of the present invention, the influence of circuits and the like connected to the connector on the radio waves sent and received by the antenna can be reduced.

With the environment adjusting device according to the fifth aspect of the present invention, the wireless function can be inexpensively and safely added by the IC cartridge.

With the environment adjusting device according to the sixth aspect of the present invention, at least a part of the electrical components needed to add the wireless function are disposed in the electrical component section. As a result, the IC cartridge can be made inexpensive and easy-to-handle.

With the environment adjusting device according to the seventh aspect of the present invention, at least a part of the electrical components needed to add the wireless function are disposed in the remote controller. As a result, the IC cartridge can be made inexpensive and easy-to-handle.

With the environment adjusting device according to the eighth aspect of the present invention, the functions needed to add the wireless function are at least partially performed by the smartphone. As a result, the IC cartridge can be made inexpensive and easy-to-handle.

With the environment adjusting device according to the ninth aspect of the present invention, it is easier to maintain a good condition of the radio waves to be sent and received.

### BRIEF DESCRIPTION OF THE DRAWINGS

FIG. 1 is a perspective view illustrating an appearance of an air conditioner according to a first embodiment of the present invention.
FIG. 2 is a circuit diagram of the air conditioner illustrated in FIG. 1.
FIG. 3 is a plan view illustrating an appearance of an IC cartridge.
FIG. 4 is a conceptual drawing that explains the relationship between the IC cartridge and the air conditioner.
FIG. 5 is a partially enlarged perspective view that explains insertion and removal operations of the IC cartridge.
FIG. 6A is a front view that explains positional relationships between metal members of the air conditioner and the IC cartridge; FIG. 6B is a bottom view that explains the positional relationships between the metal members of the air conditioner and the IC cartridge; and FIG. 6C is a side view that explains the positional relationships between the metal members of the air conditioner and the IC cartridge.
FIG. 7 is a plan view of an internal structure of a lower lid side of the IC cartridge.
FIG. 8 is a plan view of an internal structure of an upper lid side of the IC cartridge.
FIG. 9 is a block diagram that explains electrical components that constitute a wireless function of the air conditioner.
FIG. 10 is a cross-sectional view of the IC cartridge, taken along line I-I of FIG. 3.
FIG. 11 is a conceptual drawing that explains an IC cartridge and a connector of Modification Example IF.
FIG. 12 is a conceptual drawing that explains an IC cartridge and a connector of Modification Example 1G.
FIG. 13 is a perspective view of an air cleaner according to a second embodiment of the present invention.
FIG. 14 is an exploded perspective view of the air cleaner of FIG. 13.
FIG. 15 is a block diagram that explains an electrical component section of the air cleaner.
FIG. 16 is a circuit diagram of a floor heating device according to a third embodiment of the present invention.
FIG. 17 is a perspective view of the floor heating device of FIG. 16.
FIG. 18 is an exploded perspective view of a water heat exchanger of the floor heating device.
FIG. 19 is a circuit diagram of a hot water supply system according to a fourth embodiment of the present invention.
FIG. 20 is a perspective view illustrating a water heater of the hot water supply system of FIG. 19.
FIG. 21 is a circuit diagram of a humidity control device according to a fifth embodiment of the present invention.
FIG. 22 is a perspective view illustrating an appearance of the humidity control device illustrated in FIG. 21.
FIG. 23 is a perspective view illustrating an internal structure of the humidity control device illustrated in FIG. 22.

### DESCRIPTION OF EMBODIMENTS

### <First Embodiment>

Environment adjusting devices are devices for adjusting indoor environments. The term "indoor environment" includes indoor temperature, indoor humidity, dust contained in indoor air, and the temperature of water (hot water) used indoors. Examples of environment adjusting devices that adjust such indoor environments include air conditioners, air cleaners, floor heating devices, water heaters, and humidity control devices. Here, an air conditioner is given as an example of an environment adjusting device according to an embodiment of the present invention.

### (1) Configuration of Air Conditioner

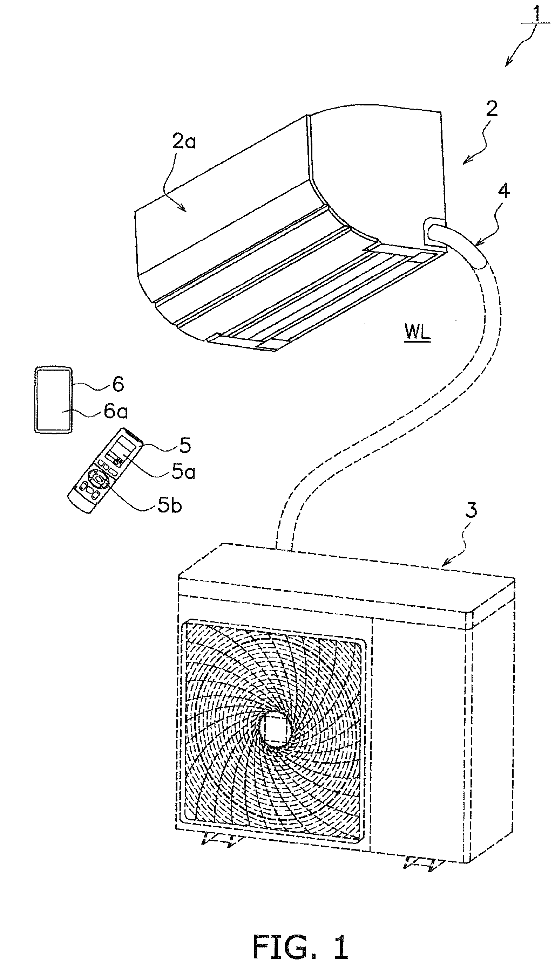

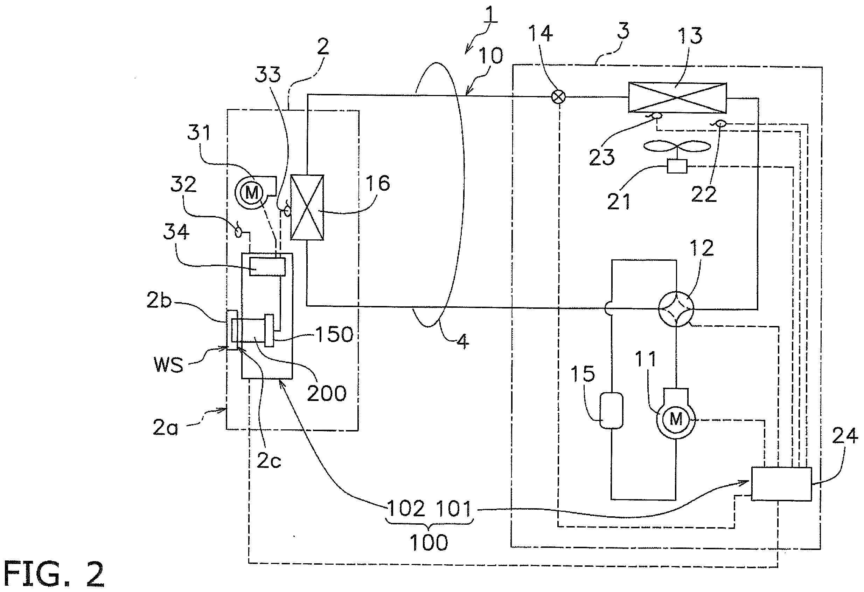

FIG. 1 and FIG. 2 illustrate an overview of a configuration of the air conditioner according to a first embodiment of the present invention. An air conditioner 1 illustrated in FIG. 1 includes an indoor unit 2 and an outdoor unit 3. The indoor unit 2 is to be mounted to a wall surface WL or the like indoors, and the outdoor unit 3 is to be installed outdoors. FIG. 2 is a circuit diagram of the air conditioner 1. The air conditioner 1 is provided with a refrigeration circuit 10, and is capable of executing a vapor-compression refrigeration cycle by circulating a refrigerant in the refrigeration circuit 10. The indoor unit 2 is connected to the outdoor unit 3 by a connection tube 4 to enable circulation of the refrigerant in the refrigeration circuit 10.

### (1-1) Refrigeration Circuit 10

The refrigeration circuit 10 includes a compressor 11, a four-way switching valve 12, an outdoor heat exchanger 13, an expansion mechanism 14, an accumulator 15, and an indoor heat exchanger 16. The compressor 11 suctions the refrigerant through an intake port, compresses the refrigerant, and discharges the compressed refrigerant through a discharge port. The refrigerant discharged from the discharge port is sent to a first port of the four-way switching valve 12.

As indicated by the dashed lines, when the air conditioner 1 is performing heating operation, the four-way switching valve 12 allows the refrigerant to flow between the first port and a fourth port and, at the same time, allows the refrigerant to flow between a second port and a third port. Additionally, as indicated by the solid lines, when the air conditioner 1 is performing cooling operation, the four-way switching valve 12 allows the refrigerant to flow between the first port and the second port and, at the same time, allows the refrigerant to flow between the third port and the fourth port.

The outdoor heat exchanger 13 has a gas-side port that primarily allows a gas refrigerant to flow between the second port of the four-way switching valve 12 and the outdoor heat exchanger 13. Additionally, the outdoor heat exchanger 13 has a liquid-side port that primarily allows a liquid refrigerant to flow between the expansion mechanism 14 and the outdoor heat exchanger 13. The outdoor heat exchanger 13 performs heat exchange between outdoor air and the refrigerant flowing through a heat transfer tube (not illustrated in the drawings) connected between the liquid-side port and the gas-side port of the outdoor heat exchanger 13.

The expansion mechanism 14 is disposed between the outdoor heat exchanger 13 and the indoor heat exchanger 16. The expansion mechanism 14 has a function of expanding and decompressing the refrigerant flowing between the outdoor heat exchanger 13 and the indoor heat exchanger 16.

The indoor heat exchanger 16 has a liquid-side port that allows the liquid refrigerant to flow between the expansion mechanism 14 and the indoor heat exchanger 16. Additionally, the indoor heat exchanger 16 has a gas-side port that allows the gas refrigerant to flow between the fourth port of the four-way switching valve 12 and the indoor heat exchanger 16. The indoor heat exchanger 16 performs heat exchange between indoor air and the refrigerant flowing through a heat transfer tube (not illustrated in the drawings) connected between the liquid-side port and the gas-side port of the indoor heat exchanger 16. The accumulator 15 is disposed between the third port of the four-way switching valve 12 and the intake port of the compressor 11. The refrigerant flowing from the third port of the four-way switching valve 12 to the compressor 11 is separated into the gas refrigerant and the liquid refrigerant at the accumulator 15. Then, primarily, the gas refrigerant is supplied from the accumulator 15 to the intake port of the compressor 11.

### (1-2) Outdoor Fan, Indoor Fan, and Sensors

The outdoor unit 3 is provided with an outdoor fan 21. The outdoor fan 21 generates an airflow of outdoor air that passes through the outdoor heat exchanger 13. The indoor unit 2 is provided with an indoor fan 31. The indoor fan 31 generates an airflow of indoor air that passes through the indoor heat exchanger 16. The outdoor unit 3 also has various sensors including, for example, an outdoor temperature sensor 22 that measures the temperature of the outdoor air, and an outdoor heat exchanger temperature sensor 23 that measures the temperature of the outdoor heat exchanger 13. The indoor unit 2 also has various sensors including, for example, an indoor temperature sensor 32 that measures the temperature of the indoor air, and an indoor heat exchanger temperature sensor 33 that measures the temperature of the indoor heat exchanger 16.

### (1-3) Electrical Component Section

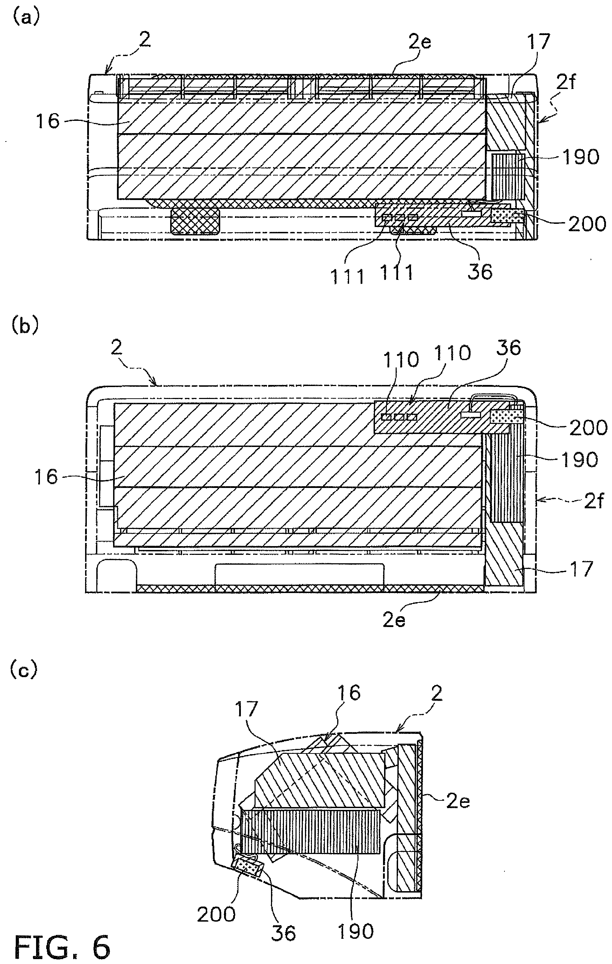

An electrical component section 100 includes an outdoor electrical component section 101 and an indoor electrical component section 102. The outdoor electrical component section 101 includes an outdoor-side control device 24. The outdoor-side control device 24 controls the compressor 11, the four-way switching valve 12, the expansion mechanism 14, and the outdoor fan 21. In one example, this outdoor-side control device 24 includes a CPU (not illustrated in the drawings) and memory (not illustrated in the drawings), and is configured to be capable of controlling the outdoor unit 3 in accordance with a stored program or the like. The indoor electrical component section 102 includes an indoor-side control device 34. The indoor-side control device 34 controls the indoor fan 31. In one example, this indoor-side control device 34 includes a CPU (not illustrated in the drawings) and memory (not illustrated in the drawings) housed in an electrical component box 190 (described later, see FIG. 6C), and is configured to be capable of controlling the outdoor unit 3 in accordance with a stored program or the like. Moreover, the outdoor-side control device 24 and the indoor-side control device 34 are connected to each other by a signal line, and are configured to be capable of sending and receiving signals to and from each other.

The outdoor-side control device 24 is connected to the outdoor temperature sensor 22 and the outdoor heat exchanger temperature sensor 23 in order to receive signals for the temperatures measured by the outdoor temperature sensor 22 and the outdoor heat exchanger temperature sensor 23. Additionally, the indoor-side control device 34 is connected to the indoor temperature sensor 32 and the indoor heat exchanger temperature sensor 33 in order to receive signals for the temperatures measured by the indoor temperature sensor 32 and the indoor heat exchanger temperature sensor 33.

Furthermore, the indoor electrical component section 102 includes a display portion 110. In one example, the display portion 110 includes an LED 111 (see FIG. 6A and FIG. 6B). As illustrated in FIG. 2, the indoor electrical component section 102 is configured so that an IC cartridge 200 can be inserted into and removed from the indoor electrical component section 102. The IC cartridge 200 is supported by the indoor unit 2 while inserted into the indoor electrical component section 102. In other words, the IC cartridge 200 is supported by the air conditioner 1 while inserted into the electrical component section 100. Specifically, due to the fact that the IC cartridge 200 itself is light-weight, the IC cartridge 200 is supported by a connector 150.

The indoor unit 2 has a main body casing 2a that is openable and closeable. An outer lid 2b is provided on the main body casing 2a for inserting or removing the IC cartridge 200 into or from the indoor electrical component section 102, and also for protecting the IC cartridge 200 inserted into the indoor electrical component section 102. In one example, this outer lid 2b is a front panel 2g (see FIG. 1) of the indoor unit 2. The main body casing 2a is configured such that, while the IC cartridge 200 is inserted into the connector 150, a second edge portion 212 of the IC cartridge 200 protrudes into a workspace WS, which is covered by the outer lid 2b. A worker can insert or remove the IC cartridge 200 by opening the outer lid 2b and grasping the second edge portion 212 by hand, for example.

### (1-4) Remote Controller 5 and Smartphone 6

As illustrated in FIG. 1, the air conditioner 1 is provided with a remote controller 5. In one example, the remote controller 5 sends commands to the electrical component section 100 via infrared beams. A configuration is possible in which the remote controller 5 is capable of receiving signals sent from the electrical component section 100 via infrared beams. Alternatively, a configuration is possible in which the remote controller 5 is connected to the indoor unit 2 by a wire and is capable of sending and receiving signals via the wire. The remote controller 5 includes a liquid crystal display 5a and a plurality of buttons 5b.

The air conditioner 1 illustrated in FIG. 1 is configured to be connectible to a smartphone 6 via the Internet. The connection between the air conditioner 1 and the smartphone 6 is performed by a wireless function realized using the IC cartridge 200.

### (2) IC Cartridge

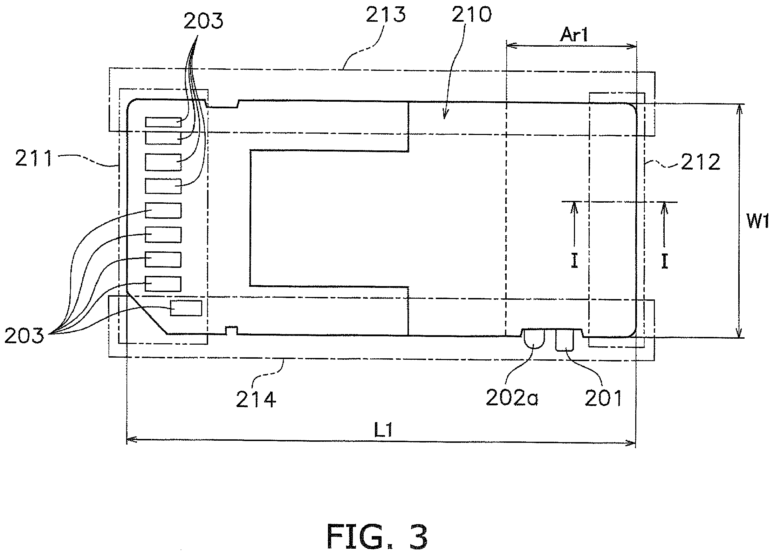

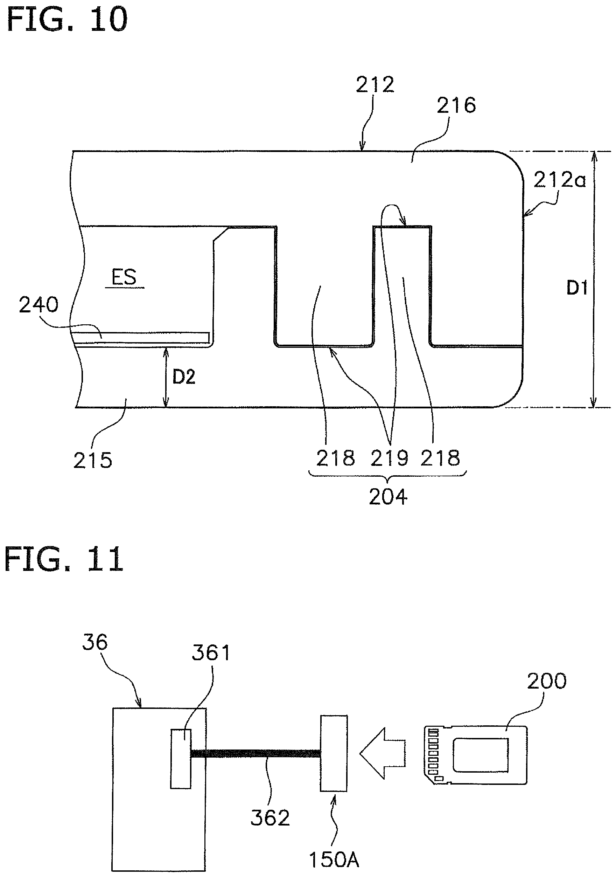

FIG. 3 illustrates a planar shape of the IC cartridge 200. The IC cartridge 200 is provided with an insulating case 210 and a plurality of connection terminals 203. In one example, a length L1 of the IC cartridge 200 is from a few cm to a few tens of cm, a width W1 of the IC cartridge 200 is about half of the length L1, and a thickness D1 (see FIG. 10) of the IC cartridge 200 is from a few mm to 1 cm. A region between the two-dot one-dash line and the edge of the second edge portion 212 illustrated in FIG. 3 is a protrusion region Ar1 that protrudes into the workspace WS. With the exception of allowing the plurality of connection terminals 203 to be exposed, the insulating case 210 covers an electric circuit 220 (see FIG. 3) of the IC cartridge 200.

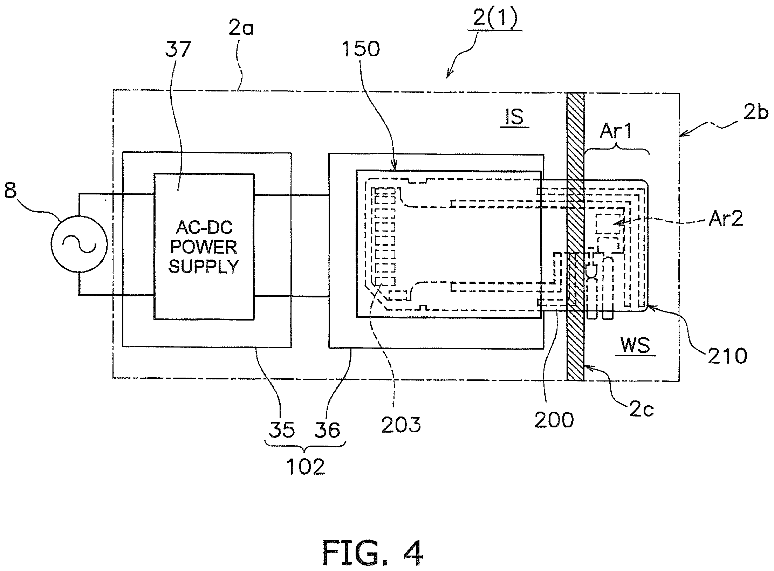

The plurality of connection terminals 203 are formed on a first edge portion 211 of the insulating case 210. In the insulating case 210, the second edge portion 212 is opposite the first edge portion 211. Workers frequently grasp the second edge portion 212 or the vicinity thereof by hand or the like when inserting or removing the IC cartridge 200. Of the four edge portions of the insulating case 210, a third edge portion 213 and a fourth edge portion 214 are perimeters of edges orthogonal to the first edge portion 211 and the second edge portion 212. The first edge portion 211 to the fourth edge portion 214 have a certain amount of area and, as such, partially overlap each other in some regions. A WPS button 201 and an LED 202 are disposed in the protrusion region Ar1. The term "WPS" is an abbreviation for "Wi-Fi (registered trademark) Protected Setup." With this IC cartridge 200, the wireless LAN can be easily configured using a WPS function by pressing the WPS button 201. The LED 202 is a power lamp that displays whether the power is ON or OFF. Power is supplied to the IC cartridge 200 from a control and power supply printed circuit board 35 (described later, see FIG. 4), and the LED 202 emits light while the IC cartridge 200 is operating.

### (2-1) Disposal of IC Cartridge in Main Body Casing

FIG. 4 conceptually illustrates a state in which the IC cartridge 200 is inserted into the indoor electrical component section 102 in the main body casing 2a of the indoor unit 2. As illustrated in FIG. 4, the indoor electrical component section 102 includes the control and power supply printed circuit board 35 and a display printed circuit board 36. The control and power supply printed circuit board 35 is housed in an electrical component box 190 (described later, see FIG. 6C). Additionally, the indoor-side control device 34 and a power supply circuit 37 are formed on the control and power supply printed circuit board 35. In one example, the power supply circuit 37 generates 12 V of DC voltage needed to operate the indoor-side control device 34 from a commercial power supply 8 that supplies 100 V or 200 V of AC voltage. The DC voltage generated by the power supply circuit 37 is supplied from the control and power supply printed circuit board 35 to the display printed circuit board 36.

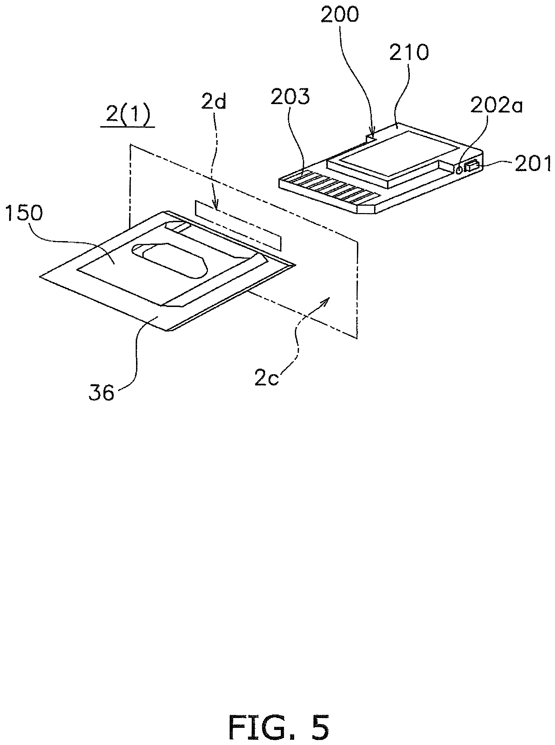

The LED 111 described above is disposed on the display printed circuit board 36. Additionally, the connector 150, into which the IC cartridge 200 is inserted, is mounted on the display printed circuit board 36. The display printed circuit board 36 is disposed in internal space IS located farther inward than an inner wall 2c. The workspace WS is located between the outer lid 2b and the inner wall 2c. The inner wall 2c has a slot entrance 2d (see FIG. 5). The slot entrance 2d is an elongated hole with dimensions slightly larger than the width W1 and the thickness D1 of the insulating case 210. The IC cartridge 200 is inserted and removed using the slot entrance 2d.

As illustrated in FIG. 4, while the plurality of connection terminals 203 of the IC cartridge 200 are inserted into the connector 150, thereby connecting the IC cartridge 200 to the indoor electrical component section 102, the protrusion region Ar1 of the IC cartridge 200 protrudes out from the inner wall 2c and is disposed in the workspace WS. Thus, due to the fact that the protrusion region Ar1 is disposed in the workspace WS, a worker can grasp the protrusion region Ar1 when inserting or removing the IC cartridge 200 and, as a result, the insertion and removal of the IC cartridge 200 is facilitated.

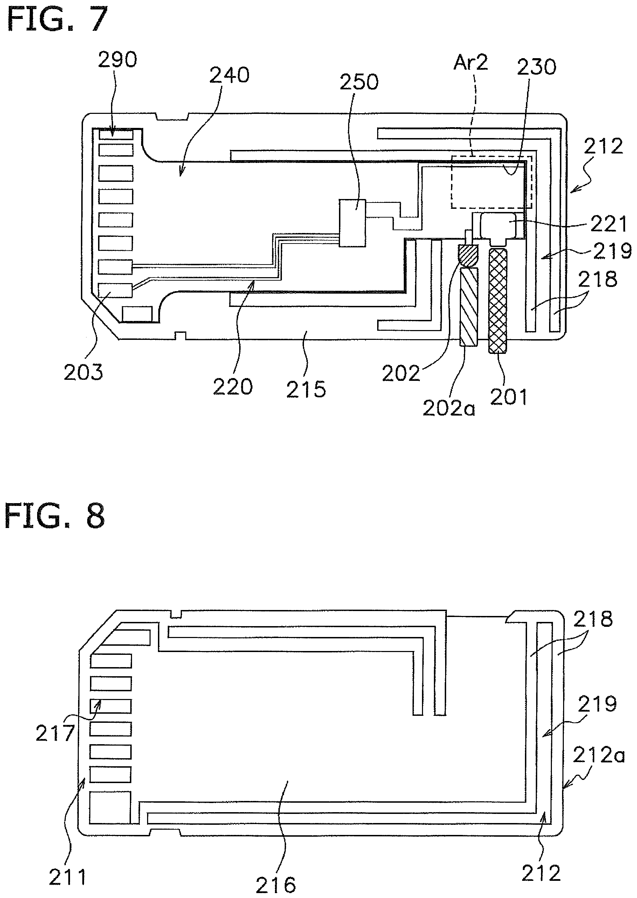

FIG. 6A, FIG. 6B, and FIG. 6C respectively illustrate the disposal position of the IC cartridge 200 when viewed from the front of the main body casing 2a, when viewed from the bottom of the main body casing 2a, and when viewed from a side of the main body casing 2a of the indoor unit 2. FIG. 6A, FIG. 6B, and FIG. 6C depict metal members around the periphery of the IC cartridge 200. The main metal members around the periphery of the IC cartridge 200 are the indoor heat exchanger 16, copper piping 17, the metal electrical component box 190, and a metal mounting plate 2e. The IC cartridge 200 is mounted on the display printed circuit board 36 disposed outside of the electrical component box 190. When the IC cartridge 200 is inserted and removed from a right side face, an antenna 230 (described later, see FIG. 7) is disposed on a side near the right side face 2f. Thus, while the IC cartridge 200 is inserted into the connector 150 (see FIG. 4) of the display printed circuit board 36, distances from the antenna 230 to the indoor heat exchanger 16, the copper piping 17, the metal electrical component box 190, and the metal mounting plate 2e are all 20 mm or greater. In other words, the connector 150 is disposed at a location such that, while the IC cartridge 200 is inserted into the connector 150, the distances from the antenna 230 to the metal members, namely the indoor heat exchanger 16, the copper piping 17, the electrical component box 190, and the metal mounting plate 2e are at least 20 mm.

### (2-2) Internal Structure of IC Cartridge

FIG. 7 and FIG. 8 illustrate a state in which the insulating case 210 is separated into a lower lid 215 and an upper lid 216, and the electric circuit 220 is installed on the lower lid 215. The electric circuit 220 and a connection terminal group 290 including the plurality of connection terminals 203 are provided on an IC chip print wiring board 240. A plurality of openings 217 with rectangular shapes is formed on the first edge portion 211 of the upper lid 216. The plurality of openings 217 corresponds to the plurality of connection terminals 203.

FIG. 8 illustrates the circuit configuration of the IC chip print wiring board 240. The electric circuit 220 formed on the IC chip print wiring board 240 includes a wireless IC chip 250, serial flash memory 260, a driver/receiver 270, and a DC-DC converter 280 in addition to the antenna 230.

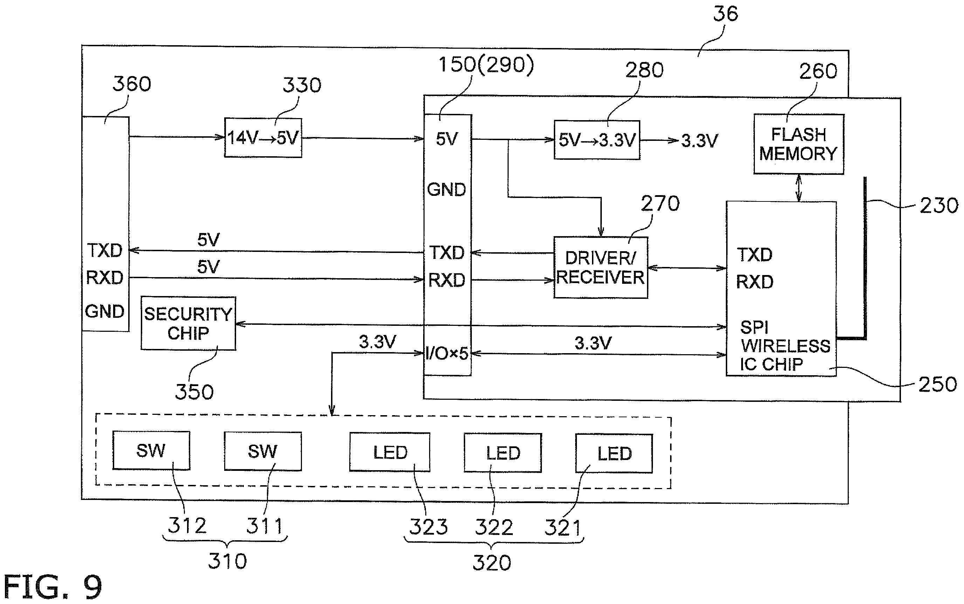

FIG. 9 illustrates electrical components disposed on the display printed circuit board 36, namely a switch group 310, an LED group 320, a DC-DC converter 330, a security chip 350, and a terminal block 360. These electrical components constitute the wireless function. Electrical components for the display of the indoor unit 2 are also mounted on the display printed circuit board 36 but, in FIG. 9, electrical components dedicated to the indoor unit 2 are not depicted. The security chip 350 is an integrated circuit with security related processing functions. Note that a configuration is possible in which the LED 111 of the display portion 110 of the indoor unit 2 is used as the LED group 320. Alternatively, a configuration is possible in which the LED group 320 is provided separately from the LED 111 of the display portion 110 of the indoor unit 2.

Wiring is connected to the terminal block 360. This wiring provides connections to the control and power supply printed circuit board 35 and other components in the electrical component box 190. A DC voltage of 14 V is supplied to the DC-DC converter 330 via the terminal block 360. The DC-DC converter 330 converts the 14 V of DC voltage to 5 V of DC voltage and supplies this 5 V of DC voltage to the DC-DC converter 280 and the driver/receiver 270 in the IC cartridge 200 via the connection terminal group 290 connected to the connector 150. The DC-DC converter 280 converts the 5 V of DC voltage to 3.3 V of DC voltage and supplies the 3.3 V of DC voltage to the electric circuit 220 of the IC cartridge 200.

Control signals TXD and RXD are transmitted between the connection terminal group 290 (the connector 150) and the control and power supply printed circuit board 35 via the terminal block 360. These control signals TXD and RXD are sent and received between the wireless IC chip 250 and the control and power supply printed circuit board 35 via the connection terminal group 290 (the connector 150) and the driver/receiver 270. Information is exchanged between the wireless IC chip 250 and the security chip 350 across a serial peripheral interface (SPI) via the connection terminal group 290 (the connector 150). Application and non-application of 0.0 V of DC voltage are selectively performed between the wireless IC chip 250 and the switch group 310 and the LED group 320 via the connector 150 (the connection terminal group 290). In one example, when switches 311 and 312 are turned ON, 0.0 V of DC voltage is applied to the wireless IC chip 250 from the switches 311 and 312 that are turned ON. When the switches 311 and 312 are turned OFF, the supply of 0.0 V of DC voltage to the wireless IC chip 250 from the switches 311 and 312 that are turned OFF is interrupted. The wireless IC chip 250 is configured by turning these switches 311 and 312 ON and OFF. Additionally, in one example, upon application of 3.3 V of DC voltage from the wireless IC chip 250 to LEDs 321, 322, and 323, the LEDs 321, 322, and 323, to which the 3.3 V of DC voltage is applied, emit light. That is, the wireless IC chip 250 can perform displays related to the wireless function by selectively applying 3.3 V of DC voltage to the LEDs 321, 322, and 323.

The antenna 230 is connected to the wireless IC chip 250. The wireless IC chip 250 can send and receive wireless communication radio waves for sending and receiving information used to adjust the indoor environment, via the antenna 230. Examples of information used by the air conditioner 1 to adjust the indoor environment include the indoor temperature and the indoor humidity. The wireless IC chip 250 temporarily stores this information in the serial flash memory 260.

As illustrated in FIG. 7, the antenna 230 extends to a location Ar2, proximal to the second edge portion 212, in the circuit region, namely the IC chip print wiring board 240, where the electric circuit 220 is formed. As illustrated in FIG. 4, the location Ar2 is included in the protrusion region Ar1 that protrudes into the workspace WS.

Furthermore, the electric circuit 220 includes a WPS switch 221. The WPS button 201 is an insulating rod-shaped member for pressing the WPS switch 221. In one example, the LED 202 disposed beside the WPS button 201 includes a light guide 202a. The light guide 202a is an insulating member that guides the light of the LED 202. Thus, sufficient insulation treatment is provided for the WPS button 201 and the LED 202.

### (2-3) Insulating Structure of IC Cartridge

FIG. 10 illustrates the cross-sectional shape of the IC cartridge 200, taken along line I-I depicted in FIG. 3. An electric circuit housing space ES is formed between the mutually combined lower lid 215 and upper lid 216. The IC chip print wiring board 240 is housed in the electric circuit housing space ES. A thickness D2 of the lower lid 215 at a portion where the IC chip print wiring board 240 is housed is configured to be 1 mm or greater in order to serve as an insulator of the electric circuit 220. In this case, the thicknesses of the upper lid 216 and the lower lid 215 are identically configured.

A protrusion 218 of the lower lid 215 and a recess 219 of the upper lid 216 are formed between the electric circuit housing space ES and the edge 212a of the second edge portion 212. The recess 219 mates with the protrusion 218. Additionally, a protrusion 218 of the upper lid 216 and a recess 219 of the lower lid 215 are formed between the electric circuit housing space ES and the edge 212a of the second edge portion 212. The recess 219 mates with the protrusion 218. The creepage distance from the electric circuit housing space ES to the edge 212a of the second edge portion 212 is greater with the uneven structure 204 than without the uneven structure 204. In this case, the commercial power supply 8 supplies 100 V or 200 V of AC voltage and, as such, preferably, creepage distance of at least 3 mm, and more preferably at least 10 mm, is secured by the uneven structure 204.

### (2-3) Sharing of Wireless Adapter Functions

In one example, in order to demonstrate the functions of the wireless adapter while the IC cartridge 200 is inserted, a MODE button, a RUN lamp, an AP lamp, and a TEST lamp in addition to the WPS button 201 and the POWER lamp, that is, the LED 202 are arrange and configured in the indoor unit 2. The wireless adapters add a wireless function to devices, which do not originally have a wireless function, by being mounted on such devices.

The WPS button 201 is used to connect to a router (wireless LAN access point, not illustrated in the drawings), and the MODE button is used to switch between modes (each of the lamps). In one example, the MODE button is also used to enable/disable remote operation from outside via the Internet. In one example, the switch 311 is assigned to this MODE button. The WPS button 201 and the switch 311 of the MODE button are electrical components that constitute the switch functions of the wireless adapter that adds the wireless function. While the WPS button 201 is provided on the IC cartridge 200, the switch 311 is provided on the display printed circuit board 36. That is, the switch 311, which is one of the electrical components that constitutes the switch functions of the wireless adapter that adds the wireless function, is disposed in the electrical component section 100. The switch 311 in the electrical component section 100 and the WPS button 201 on the IC cartridge 200 cooperate to demonstrate the switch functions of the wireless adapter.

In one example, the RUN lamp is configured to light up when connection to the router (wireless LAN access point) is established. The LED 321 is assigned to this RUN lamp. In one example, the AP lamp is configured to light up when direct connection across the wireless LAN to the smartphone 6 is established. The LED 322 is assigned to this AP lamp. In one example, the TEST lamp is configured to flash during test operations of the wireless function of the air conditioner 1 realized using the IC cartridge 200. The LED 323 is assigned to this TEST lamp. The LED 202 and the LEDs 321, 322, and 323 are electrical components that constitute the display functions of the wireless adapter that adds the wireless function. While the LED 202 is provided on the IC cartridge 200, the LEDs 321, 322, and 323 are provided on the display printed circuit board 36. That is, the LEDs 321, 322, and 323, which are a portion of the electrical components that constitute the display functions of the wireless adapter that adds the wireless function, are disposed in the electrical component section 100. The LEDs 321, 322, and 323 in the electrical component section 100 and the LED 202 on the IC cartridge 200 cooperate to demonstrate the display functions of the wireless adapter.

Additionally, the DC-DC converter 330 that supplies 5 V of DC voltage to the IC cartridge 200 is disposed on the display printed circuit board 36. That is, the DC-DC converter 330, which is one of the electrical components that constitutes the power supply functions of the wireless adapter that adds the wireless function, is disposed in the electrical component section 100. The DC-DC converter 330 in the electrical component section 100 and the DC-DC converter 280 on the IC cartridge 200 cooperate to demonstrate the power supply functions of the wireless adapter.

### (3) Modification Examples

### (3-1) Modification Example 1A

In the first embodiment, a case was described in which the functions of the wireless adapter that adds the wireless function to the air conditioner 1 are shared by the electrical component section 100 and the IC cartridge 200. A case was described in which the LED 202 is disposed on the IC cartridge 200 but, for example, a configuration is possible in which the number of LEDs of the LED group 320 is increased by one and all of the display functions are borne by the electrical component section 100. Additionally, a case was described in which the WPS button 201 is disposed on the IC cartridge 200 but, for example, a configuration is possible in which the role of the POWER lamp is assigned to the switch 312 of the switch group 310 and all of the display functions are borne by the electrical component section 100. Additionally, a case was described in which the DC-DC converter 280 is disposed on the IC cartridge 200 but, for example, a configuration is possible in which the role of the DC-DC converter 280 is performed by the DC-DC converter 340 and all of the display functions are borne by the electrical component section 100.

### (3-2) Modification Example 1B

In the first embodiment, a case was described in which the display functions of the wireless adapter that adds the wireless function to the air conditioner 1 are shared by the electrical component section 100 and the IC cartridge 200. However, a configuration is possible in which the display functions of the wireless adapter are shared not only by the electrical component section 100 and the IC cartridge 200, but by the electrical component section 100, the IC cartridge 200, and the remote controller 5. For example, a portion or all of the POWER lamp, the RUN lamp, the AP lamp, and the TEST lamp may be displayed on the liquid crystal display 5a of the remote controller 5. In other words, a configuration is possible in which a portion or all of the plurality of electrical components that constitutes the display functions of the wireless adapter is disposed in the remote controller 5. That is, configurations are possible in which the electrical component section 100, the IC cartridge 200, and the remote controller 5 cooperate to demonstrate the display functions of the wireless adapter; the IC cartridge 200 and the remote controller 5 cooperate to demonstrate the display functions of the wireless adapter; or the remote controller 5 alone demonstrates the display functions of the wireless adapter.

### (3-3) Modification Example 1C

In the first embodiment, a case was described in which the switch functions of the wireless adapter that adds the wireless function to the air conditioner 1 are shared by the electrical component section 100 and the IC cartridge 200. However, a configuration is possible in which the switch functions of the wireless adapter are shared in the air conditioner 1 not only by the electrical component section 100 and the IC cartridge 200, but by the electrical component section 100, the IC cartridge 200, and the remote controller 5. For example, a portion or all of the WPS button 201 and the MODE button may be assigned to the plurality of buttons 5b of the remote controller 5. In other words, a configuration is possible in which a portion or all of the plurality of electrical components that constitutes the switch functions of the wireless adapter is disposed in the remote controller 5. That is, configurations are possible in which the IC cartridge 200 and the remote controller 5 cooperate to demonstrate the switch functions of the wireless adapter, or the remote controller 5 alone demonstrates the switch functions of the wireless adapter. In the first embodiment described above, a case was described in which there are two switch functions of the wireless adapter, but three or more switch functions may also be provided. In such cases, a configuration is possible in which the electrical component section 100, the IC cartridge 200, and the remote controller 5 cooperate to demonstrate the switch functions of the wireless adapter.

### (3-4) Modification Example 1D

A configuration is possible in which the display functions of the wireless adapter are shared not only by the electrical component section 100 and the IC cartridge 200 as in the first embodiment, but by the electrical component section 100, the IC cartridge 200, and the smartphone 6 in the air conditioner 1. For example, a portion or all of the POWER lamp, the RUN lamp, the AP lamp, and the TEST lamp may be displayed on a touchscreen 6a of the smartphone 6. In other words, a configuration is possible in which a portion or all of the plurality of electrical components that constitutes the display functions of the wireless adapter is disposed in the smartphone 6. That is, configurations are possible in which the electrical component section 100, the IC cartridge 200, and the smartphone 6 cooperate to demonstrate the display functions of the wireless adapter; the IC cartridge 200 and the smartphone 6 cooperate to demonstrate the display functions of the wireless adapter; or the smartphone 6 alone demonstrates the display functions of the wireless adapter.

### (3-5) Modification Example IE

A configuration is possible in which the switch functions of the wireless adapter are shared not only by the electrical component section 100 and the IC cartridge 200 as in the first embodiment, but by the electrical component section 100, the IC cartridge 200, and the smartphone 6 in the air conditioner 1. For example, the MODE button may be assigned entirely to the touchscreen 6a of the smartphone 6. In other words, a configuration is possible in which at least a part of the plurality of electrical components that constitute the switch functions of the wireless adapter is disposed in the smartphone 6. That is, a configuration is possible in which the IC cartridge 200 and the smartphone 6 cooperate to demonstrate the switch functions of the wireless adapter. Note that, in the first embodiment described above, a case was described in which there are two switch functions of the wireless adapter, but three or more switch functions may also be provided. In such cases, a configuration is possible in which the electrical component section 100, the IC cartridge 200, and the smartphone 6 cooperate to demonstrate the switch functions of the wireless adapter. However, in the case of the smartphone 6, a connection must be established between the air conditioner 1 and the smartphone 6 via the Internet and, such as with the remote controller 5, the WPS button 201 cannot be assigned to the touchscreen 6a.

### (3-6) Modification Example IF

In the first embodiment described above, the connector 150 into/from which the IC cartridge 200 is inserted and removed is mounted on the display printed circuit board 36. However, in the present invention, the connector into/from which the IC cartridge 200 is inserted and removed need not be mounted on a wiring board such as the display printed circuit board 36. For example, as illustrated in FIG. 11, a configuration is possible in which the IC cartridge 200 is inserted into and removed from a connector 150A connected, by a harness 362, to a terminal block 361 of the display printed circuit board 36. In one example, this connector 150A is fixed to the main body casing 2a.

### (3-7) Modification Example 1G

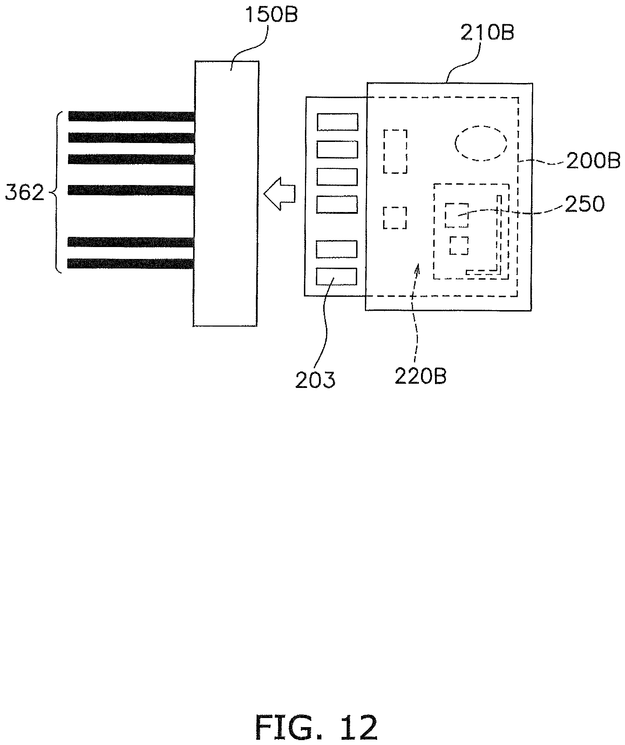

The IC cartridge 200 of the first embodiment described above includes the openings 217, which expose the connection terminals 203, in the insulating case 210. However, the configuration of the IC cartridge according to the present invention is not limited to cases in which the openings 217 are formed only at locations where the connection terminals 203 are to be exposed, as in the IC cartridge 200. For example, as with an IC cartridge 200B illustrated in FIG. 12, a configuration is possible in which an insulating case 210B is used and the area around the connection terminals 203 is not covered. This IC cartridge 200B also provides a structure in which an electric circuit 220B is covered by the insulating case 210B and it is not possible for a worker to touch any portion of the electric circuit 220B, including the connection terminals 203, while the IC cartridge 200B is inserted into the connector 150B.

### (3-8) Modification Example 1H

In the description given above, a case was described in which the IC cartridge 200 is configured to be pulled out by the force of the worker alone when removing the IC cartridge 200. However, the method of inserting and removing the IC cartridge 200 is not limited thereto. For example, a configuration is possible in which a force other than that of the worker is used, such as with a Secure Digital (SD) card. That is, a lock may be engaged by pressing the card in once, and disengaged and pushed back by the force of a spring by pressing the card in again while locked.

### (4) Features

### (4-1)

As described above, with the IC cartridge 200 or 200B, the insulating case 210 or 210B covers the entirety of the electric circuit 220 or 220B, including the wireless IC chip 250 and the antenna 230. As such, when a worker grasps the IC cartridge 200 or 200B by hand to insert or remove the connection terminals 203 into or from the connector 150, 150A, or 150B, the hand of the worker will not contact the electric circuit 220 or 220B after the connection terminals 203 have been connected to the connector 150, 150A, or 150B. As a result, the IC cartridge 200 or 200B can be safely handled. Additionally, the insulating case 210 or 210B is supported by the environment adjusting device, namely the air conditioner 1, as a result of the connection terminals 203 being inserted into the connector 150, 150A, or 150B. Moreover, the insulating case 210 or 210B separates from the air conditioner 1 as a result of the connection terminals 203 being removed from the connector 150, 150A, or 150B. Accordingly, the work involved in installing and removing the IC cartridge 200 or 200B is facilitated, thereby eliminating the work involved in adding the wireless function. As a result, it is not necessary for the wireless adapter to be built in. Furthermore, in some cases, the need to receive wireless certification for the air conditioner 1 may be eliminated, and only wireless certification for the IC cartridge 200 or 200B may be required. Typically, in many cases, it is easier to receive wireless certification for the IC cartridge 200 or 200B than to receive wireless certification for the air conditioner 1. Specifically, in the case that the IC cartridge 200 or 200B is upgraded, it is only necessary to receive certification for the newly upgraded IC cartridge 200 or 200B, and this authorized IC cartridge 200 or 200B can simply be installed in the air conditioner 1. As a result, the wireless function can be easily upgraded. Thus, it is clear that the wireless function can be inexpensively added to an environment adjusting device by using the IC cartridge 200 or 200B.

### (4-2)

The insulating case 210 includes the insulating structure, namely the uneven structure 204, that extends the creepage distance around the periphery of the electric circuit 220. With this IC cartridge 200, the insulating structure of the insulating case 210 extends the creepage distance around the periphery of the electric circuit 220. As a result, sufficient insulation for the electric circuit 220 can be secured by the insulating case 210. Note that in the first embodiment described above, the uneven structure 204 is used to extend the creepage distance but, for example, a configuration is possible in which an insulating structure other than the uneven structure 204 is used as the insulating structure that extends the creepage distance. Examples thereof include inclined structures inclined diagonally toward the edge 212a of the second edge portion 212, and folded structures that fold back in a C-shape.

### (4-3)

As described above, the insulating case 210 includes the uneven structure 204 on the inner surface between the edge 212a of the second edge portion 212 and the electric circuit 220, the uneven structure 204 being the insulating structure. Accordingly, the creepage distance from the electric circuit 220 to the edge 212a of the second edge portion 212 is extended an amount corresponding to the side faces of the protrusion 218 and the recess 219. As a result, the electric circuit 220 and the edge 212a of the second edge portion 212 are sufficiently separated, even if the insulating case 210 is small. Thus, sufficient insulation can be secured between the electric circuit 220 and the edge 212a by appropriately configuring the distance from the electric circuit 220 to the edge 212a, and the safety of workers that grasp and push the second edge portion 212 by hand can be secured. Note that, in the first embodiment, the cross-sectional shape of the protrusion 218 and the recess 219 is presented as being rectangular. However, the shape of the recess and protrusion used to form the uneven structure 204 is not limited to the rectangular shape and, for example, a protrusion and a recess having a curved cross-sectional shape, like a sine curve, may be used.

### (4-4)

With the IC cartridge 200 of the first embodiment, the antenna 230 extends to the location proximal to the second edge portion 212 opposite from the first edge portion 211 where the connection terminals 203 are disposed. Due to the fact that the antenna 230 is disposed separated from the connector 150 and the metal members in the vicinity of the connector 150, the influence of the connector 150, and the circuits and the like connected to the connector 150, on the radio waves sent and received by the antenna 230 can be reduced.

### (4-5)

In the IC cartridge 200 or 200B, the connection terminals 203 are inserted into the connector 150, 150A, or 150B as a result of the insulating case 210 or 210B being moved in the direction toward the connector 150, 150A, or 150B. Additionally, with the IC cartridge 200 or 200B, at least the wireless IC chip 250 is housed in the air conditioner 1 while the connection terminals 203 are inserted into the connector 150, 150A, or 150B. Furthermore, the IC cartridge 200 or 200B is configured such that the connection terminals 203 are removed from the connector 150, 150A, or 150B as a result of the insulating case 210 or 210B being moved in the direction away from the connector 150, 150A, or 150B.

As a result, the IC cartridge 200 or 200B can be easily installed in and removed from the air conditioner 1, and the wireless IC chip 250 can be easily housed in the air conditioner 1 while the connection terminals 203 are inserted into the connector 150, 150A, or 150B. Accordingly, maintenance of the IC cartridge 200 or 200B, improvement of the functions of the IC cartridge 200 or 200B, and correction of defects of the IC cartridge 200 or 200B can be easily performed, and sufficient protection functions for the wireless IC chip 250 can be obtained.

### (4-6)

In the first embodiment, the environment adjusting device, namely the air conditioner 1, is provided with the IC cartridge 200 or 200B. There are, for example, cases in which wireless certification is required to add the wireless function to the air conditioner 1, and protocols differ by country. There are cases where it is possible to receive wireless certification for the air conditioner 1, and also cases where it is possible to receive certification for the IC cartridge 200 or 200B. In such cases, if wireless certification is received for the air conditioner 1, there may be a need to re-apply for wireless certification for the air conditioner 1 when upgrading the wireless function. In contrast, if wireless certification is received for the IC cartridge 200 or 200B, the wireless function of the air conditioner 1 can be upgraded simply by replacing the old IC cartridge 200 or 200B with the upgraded IC cartridge 200 or 200B. Thus, the wireless function of the air conditioner 1 can be inexpensively upgraded. By combining this with the feature described above in (4-1), the wireless function of the air conditioner 1 can be inexpensively and safely added using the IC cartridge 200 or 200B.

### (4-7)

The air conditioner 1 of the first embodiment includes the electrical component section 100 provided in the main body casing 2a, and a plurality of electrical components are installed in the electrical component section 100. The at least a part of the plurality of electrical components that constitute the switch functions, the display functions, and the power supply functions of the wireless adapter that adds the wireless function is disposed in the electrical component section 100. Specifically, as illustrated in FIG. 9, the air conditioner 1 includes the switch 311 disposed on the display printed circuit board 36 as an electrical component that constitutes a switch function. Additionally, the air conditioner 1 includes the LEDs 321, 322, and 323 disposed on the display printed circuit board 36 as electrical components that constitute the display functions. Furthermore, the air conditioner 1 includes the DC-DC converter 330 as an electrical component that constitutes a power supply function. Moreover, while the IC cartridge 200 is inserted into the connector 150, the IC cartridge 200 is circuit connected to the electrical component section 100, and the IC cartridge 200 and the electrical component section 100 cooperate to demonstrate the functions of the wireless adapter.

With the air conditioner 1, the plurality of electrical components that constitute the switch functions, the display functions, and the power supply functions of the wireless adapter, namely the switch 311, the LEDs 321, 322, and 323, and the DC-DC converter 330, are disposed in the electrical component section 100. As a result, the number of electrical components of the IC cartridge 200 can be reduced and the IC cartridge 200 can be simplified and miniaturized. Thus, the at least a part of the electrical components needed to add the wireless function are disposed in the electrical component section 100 and, as a result, the IC cartridge 200 of the air conditioner 1 can be made inexpensive and easy-to-handle.

### (4-8)

The air conditioner 1 described above in Modification Examples 1B and 1C includes the remote controller 5 capable of sending and receiving data to and from the electrical component section 100. In Modification Examples 1B and 1C, the at least a part of the plurality of electrical components that constitute the switch functions and the display functions of the wireless adapter is disposed in the remote controller 5 of the air conditioner 1. While the IC cartridge 200 is inserted into the connector 150, the IC cartridge 200 is circuit connected to the electrical component section 100, and the IC cartridge 200, the electrical component section 100, and the remote controller 5 cooperate to demonstrate the functions of the wireless adapter. Specifically, in Modification Example 1B, the liquid crystal display 5a of the remote controller 5 is an electrical component that constitutes a display function of the wireless adapter. In Modification Example 1C, the buttons 5b of the remote controller 5 are electrical components that constitute switch functions of the wireless adapter.

Thus, the at least a part of the plurality of electrical components that constitute the switch functions and the display functions of the wireless adapter is disposed in the remote controller 5. As a result, the number of electrical components of the IC cartridge 200 can be reduced and the IC cartridge 200 can be simplified and miniaturized. Thus, the at least a part of the electrical components needed to add the wireless function are disposed in the remote controller 5 and, as a result, the IC cartridge 200 of the air conditioner 1 can be made inexpensive and easy-to-handle.

### (4-9)

With the air conditioner 1 described above in Modification Examples 1D and IE, the IC cartridge 200 is configured to be capable of sending and receiving data to and from the smartphone 6. Moreover, the switch functions and the display functions of the wireless adapter are at least partially realized by the smartphone 6. Specifically, in Modification Example 1D, the touchscreen 6a of the smartphone 6 is an electrical component that constitutes a display function of the wireless adapter. In Modification Example IE, the touchscreen 6a of the smartphone 6 is an electrical component that constitutes switch functions of the wireless adapter.

Thus, the at least a part of the plurality of electrical components that constitute the switch functions and the display functions of the wireless adapter is disposed in the smartphone 6. As a result, the number of electrical components of the IC cartridge 200 can be reduced and the IC cartridge 200 can be simplified and miniaturized. Thus, the at least a part of the electrical components needed to add the wireless function are disposed in the smartphone 6 and, as a result, the IC cartridge 200 of the air conditioner 1 can be made inexpensive and easy-to-handle.

### (4-10)

As described with reference to FIG. 6, the air conditioner 1 of the first embodiment is provided with the metal members installed in the main body casing 2a. In one example, the metal members of the air conditioner 1 are the indoor heat exchanger 16, the copper piping 17, the metal electrical component box 190, and the metal mounting plate 2e. The connector 150 is disposed at a location such that, while the IC cartridge 200 is inserted into the connector 150, the distances from the antenna 230 to the metal members are at least 20 mm.

Thus, with the air conditioner 1, while the IC cartridge 200 is inserted into the connector 150, the distances from the antenna 230 to the metal members are at least 20 mm. As a result, it is possible to sufficiently reduce influences of the metal members on the radio waves sent and received by the antenna 230, which makes it easier to maintain a good condition of the radio waves to be sent and received.

### <Second Embodiment>

### (5) Appearance of Air Cleaner

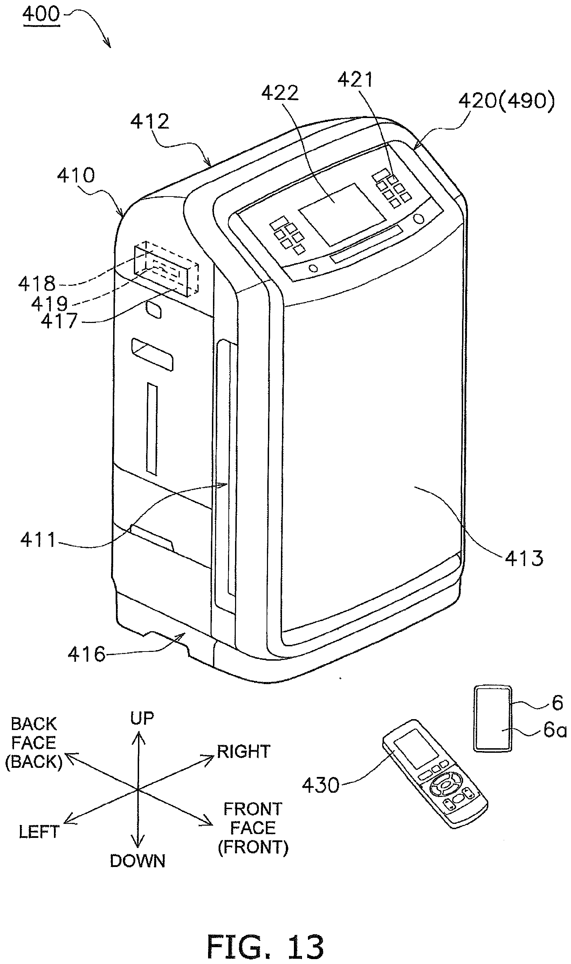

Next, an air cleaner is given as an example of an environment adjusting device according to a second embodiment of the present invention. The air cleaner according to the second embodiment is configured to send and receive a portion or all of information used to adjust the indoor environment by inserting the IC cartridge 200 described above. Examples of such information include turning power ON and OFF, air volume, air direction, whether or not to humidify, whether or not to perform corona discharge, and whether or not to perform streamer discharge. In the following description, the directional terms "up", "down", "left", "right", "front face (front)", and back face (back) are used. Unless stated otherwise, these terms correspond to the directions illustrated in FIG. 13.

FIG. 13 is a perspective view of a front face of the air cleaner, viewed from above and to the right. That is, from the standpoint of an air cleaner 400, the air cleaner 400 illustrated in this perspective view is viewed from above the left front face of the air cleaner 400. As illustrated in FIG. 13, the air cleaner 400 is provided with a main body casing 410, an electrical component section 490, and a remote controller 430. The air cleaner 400 is a floor-standing device that is installed by placing a leg portion 416 of the main body casing 410 on a floor surface.

The main body casing 410 includes an intake port 411 and a blowing port 412. The intake port 411 is provided in a left side face and a right side face of the main body casing 410. The air cleaner 400 suctions indoor air through the intake port 411, conditions the air, and then blows the conditioned air through the blowing port 412.

### (6) Internal Structure of Air Cleaner

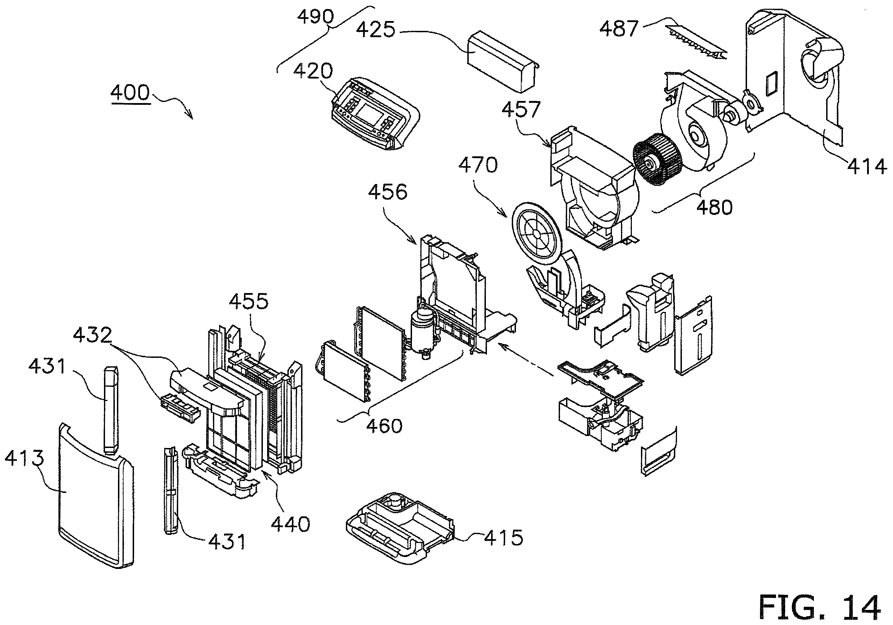

FIG. 14 is an exploded perspective view of the air cleaner 400. As illustrated in FIG. 14, the main body casing 410 includes a front face panel 413, a back face panel 414, and a bottom frame 415. The electrical component section 490 includes an operation panel 420 and an electrical component unit 425. In one example, this air cleaner 400 is configured with operating modes, namely an air cleaning mode, a dehumidification mode, and a humidification mode. The operating mode is switched by operating the operation panel 420 or the remote controller 430. The air cleaner 400 includes, in the space surrounded by the front face panel 413, the back face panel 414, and the bottom frame 415, the electrical component unit 425, a corona discharge unit 431, a streamer discharge unit 432, a filter unit 440, a front frame 455, a dehumidification frame 456, a back frame 457, a refrigeration cycle unit 460, a humidification unit 470, and a fan unit 480.

Corona discharges can be induced in the corona discharge unit 431 using the potential difference generated between a positive electrode and a negative electrode. The air suctioned through the intake port 411 passes through the corona discharge unit 431. The filter unit 440 is housed in the front frame 455 on a back side of the front face panel 413, and the air suctioned through the intake port 411 and passed through the corona discharge unit 431 is guided to the filter unit 440. The filter unit 440 illustrated in FIG. 14 includes, in order from the front, a prefilter, a dust collecting filter, and a deodorizing filter, for removing dust and odors and the like.

The dehumidification frame 456 is provided at a back portion of the front frame 455, and the refrigeration cycle unit 460 is disposed between the front frame 455 and the dehumidification frame 456. The refrigeration cycle unit 460 includes a refrigeration circuit connected so as to sequentially circulate a refrigerant to, for example, a compressor, a condenser, a decompression mechanism, and an evaporator. During dehumidification operation, the refrigeration cycle unit 460 is configured to be capable of dehumidification in which, using the refrigeration cycle performed in the refrigeration circuit, air is cooled to below the dew point and condensed moisture is removed using the evaporator or the like.

The back frame 457 is provided on a back face side of the dehumidification frame 456 and the humidification unit 470 is housed between the dehumidification frame 456 and the back frame 457. The air that has passed through the filter unit 440 and the refrigeration cycle unit 460 is guided to the humidification unit 470. In one example, the humidification unit 470 includes a humidification rotor, a storage case, and a water tank to humidify the air passing through the humidification unit 470.

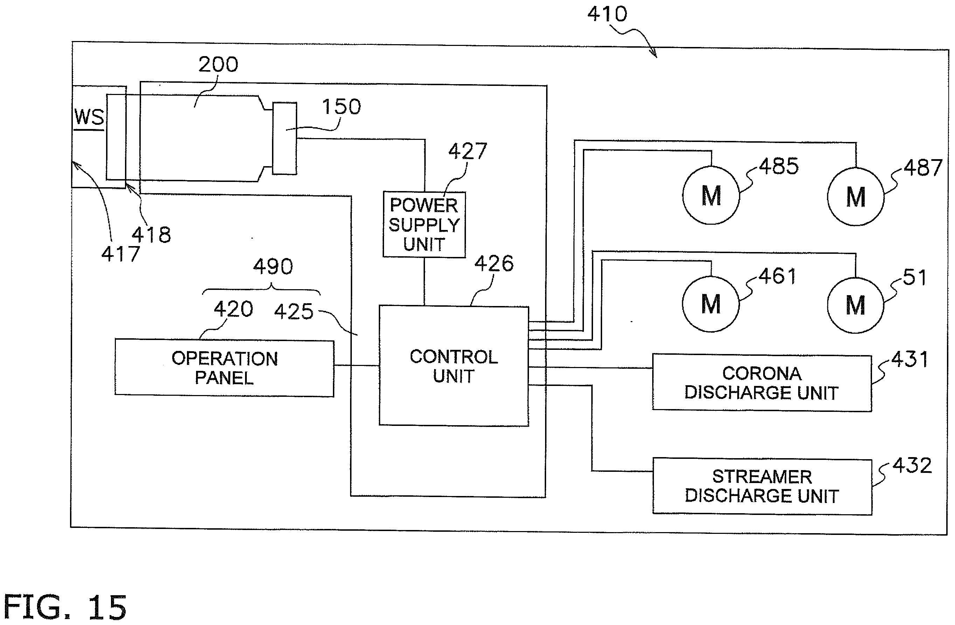

The back frame 457 is provided on a back face side of the dehumidification frame 456, and the fan unit 480 is housed between the back frame 457 and the back face panel 414. The fan unit 480 generates an airflow that is blown through the blowing port 412, and creates a flow of the air suctioned through the intake port 411 and that sequentially passes through the filter unit 440, the refrigeration cycle unit 460, and the humidification unit 470. The fan unit 480 includes a fan motor 485 (see FIG. 15), and the air volume can be changed by changing the rotational speed of the fan motor 485. A flap 486 is disposed above the fan unit 480. The blowing port 412 is covered by the flap 486 while the flap 486 is closed. The flap 486 is driven by a flap motor 487 (see FIG. 15), and performs open/close operations and swing operations.

FIG. 15 illustrates blocks controlled by the electrical component section 490. The electrical component section 490 includes a control unit 426. The control unit 426 is connected to the operation panel 420. The control unit 426 controls a compressor motor 461 of the refrigeration cycle unit 460, a humidification rotor motor 471 of the humidification unit 470, the fan motor 485, the flap motor 487, the corona discharge unit 431, and the streamer discharge unit 432.

The electrical component section 490 includes the IC cartridge 200 and the connector 150 to which the IC cartridge 200 can be removably mounted.

### (7) Sharing of Wireless Adapter Functions by Electrical Component Section 490

In the air cleaner 400 as well, among the plurality of electrical components in the electrical component section 490, the part of the plurality of electrical components that constitute the switch functions, the display functions, and the power supply functions of the wireless adapter that adds the wireless function is disposed in the electrical component section 490. Specifically, the air cleaner 400 includes buttons 421 disposed on the operation panel 420 as electrical components that constitute switch functions. Additionally, the air cleaner 400 includes a liquid crystal display device 422 disposed on the operation panel 420 as an electrical component that constitutes the display functions. Furthermore, the air cleaner 400 includes a power supply unit 427 as an electrical component that constitutes the power supply functions. Moreover, while the IC cartridge 200 is inserted into the connector 150, the IC cartridge 200 is circuit connected to the electrical component section 490, and the IC cartridge 200 and the electrical component section 490 cooperate to demonstrate the functions of the wireless adapter.

With this air cleaner 400, the plurality of electrical components that constitute the switch functions, the display functions, and the power supply functions of the wireless adapter, namely the buttons 421, the liquid crystal display device 422, and the power supply unit 427, are disposed in the electrical component section 490. As a result, the number of electrical components of the IC cartridge 200 can be reduced and the IC cartridge 200 can be simplified and miniaturized. Thus, the part of the electrical components needed to add the wireless function are disposed in the electrical component section 490 and, as a result, the IC cartridge 200 of the air cleaner 400 can be made inexpensive and easy-to-handle.

### (8) Sharing of Wireless Adapter Functions by Remote Controller 430

The air cleaner 400 is provided with a remote controller 430 that is capable of sending and receiving data to and from the electrical component section 490. The part of the plurality of electrical components that constitute the switch functions and the display functions of the wireless adapter may be disposed in the remote controller 430 of the air cleaner 400. A configuration is possible in which, while the IC cartridge 200 is inserted into the connector 150, the IC cartridge 200 is circuit connected to the electrical component section 490, and the IC cartridge 200, the electrical component section 490, and the remote controller 430 cooperate to demonstrate the functions of the wireless adapter. For example, the remote controller 430 may include a liquid crystal display 436 as an electrical component that constitutes display functions of the wireless adapter. Additionally, the remote controller 430 may include buttons 435 as electrical components that constitute switch functions of the wireless adapter. As a result of this configuration, the part of the plurality of electrical components that constitute the switch functions and the display functions of the wireless adapter is disposed in the remote controller 430. As a result, the number of electrical components of the IC cartridge 200 can be reduced and the IC cartridge 200 can be simplified and miniaturized. Thus, the part of the electrical components needed to add the wireless function are disposed in the remote controller 430 and, as a result, the IC cartridge 200 of the air cleaner 400 can be made inexpensive and easy-to-handle.

### (9) Sharing of Wireless Adapter Functions by Smartphone 6

With the air cleaner 400, the IC cartridge 200 is configured to be capable of sending and receiving data to and from the smartphone 6. Moreover, the switch functions and the display functions of the wireless adapter may be partially realized by the smartphone 6. When configured in this manner, the touchscreen 6a of the smartphone 6, for example, may be an electrical component that constitutes display functions of the wireless adapter. Additionally, the touchscreen 6a of the smartphone 6 may be an electrical component that constitutes switch functions of the wireless adapter. As a result of this configuration, the part of the plurality of electrical components that constitutes the switch functions and the display functions of the wireless adapter is disposed in the smartphone 6. As a result, the number of electrical components of the IC cartridge 200 can be reduced and the IC cartridge 200 can be simplified and miniaturized. Thus, the part of the electrical components needed to add the wireless function are disposed in the smartphone 6 and, as a result, the IC cartridge 200 of the air cleaner 400 can be made inexpensive and easy-to-handle.

### (10) Mounting Portion of IC cartridge 200

The main body casing 410 includes an outer lid 417 and an inner wall 418. The outer lid 417 and the inner wall 418 are disposed on the left side face of the main body casing 410. The inner wall 418 includes a slot entrance 419. The IC cartridge 200 is inserted and removed using the slot entrance 419. A workspace WS is formed between the outer lid 417 and the inner wall 418. The main body casing 410 is configured such that, while the IC cartridge 200 is inserted into the connector 150, the second edge portion 212 of the IC cartridge 200 protrudes into the workspace WS, which is covered by the outer lid 417. A worker can insert or remove the IC cartridge 200 by opening the outer lid 417 and grasping the second edge portion 212 by hand, for example. Note that, in cases where the main body casing 410 is formed from metal plates, the outer lid 417 is formed from, for example, a resin plate through which radio waves can pass in order to allow the IC cartridge 200 to send and receive radio waves. In such cases, it is preferable that the inner wall 418 also be formed from resin through which radio waves can pass.

### Third Embodiment

### (11) Overview of Floor Heating Device

Next, a floor heating device is given as an example of an environment adjusting device according to a third embodiment of the present invention. The floor heating device according to the third embodiment is configured to send and receive a portion or all of information used to adjust the indoor environment by inserting the IC cartridge 200 described above. Examples of such information include whether or not to perform floor heating and temperature settings of the floor heating.

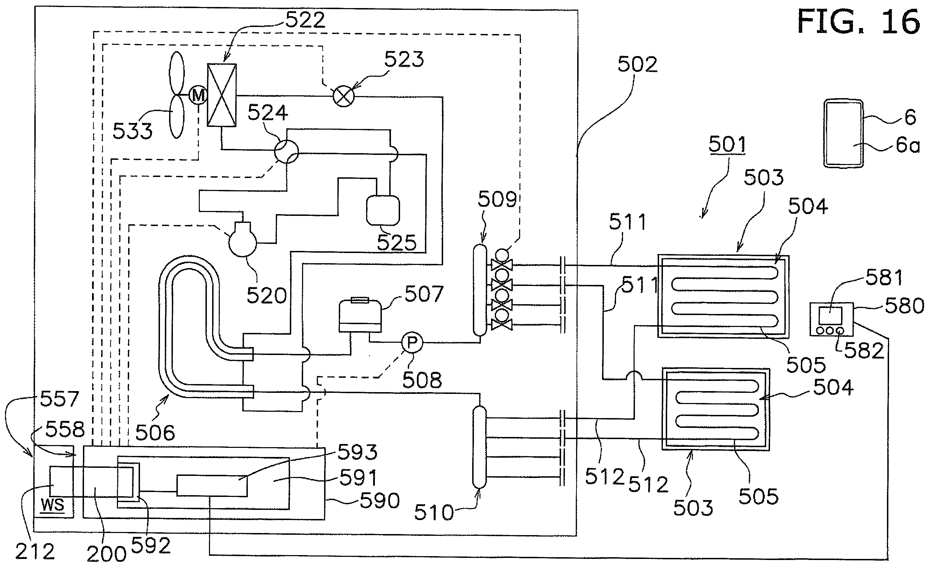

FIG. 16 illustrates an overview of a circuit configuration of the floor heating device. The floor heating device 500 includes a water circulation path 501, a heat pump unit 502, and a floor heater 503. Hot water heated by the heat pump unit 502 is circulated in the water circulation path 501 to warm up the floor heater 503.

The floor heater 503 includes a floor panel 504 and a hot water circulation pipe 505. The heat pump unit 502 includes a water heat exchanger 506, an expansion tank 507, a circulation pump 508, and headers 509 and 510. The heat pump unit 502 is connected to the floor heater 503 by piping 511 and 512, and the headers 509 and 510 are connected to the hot water circulation pipe 505. Thus, the water circulation path 501 is formed in which hot water is circulated by the circulation pump 508 through the water heat exchanger 506, the expansion tank 507, the circulation pump 508, the headers 509 and 510, the piping 511 and 512, and the hot water circulation pipe 505.

### (12) Configuration of Heat Pump Unit

The heat pump unit 502 illustrated in FIG. 16 includes a compressor 520, the water heat exchanger 506, an air heat exchanger 522, an expansion valve 523, a four-way switching valve 524, and an accumulator 525. That is, a first primary port of the four-way switching valve 524 is connected to a discharge pipe of the compressor 520, and a second primary port of the four-way switching valve 524 is connected to an intake pipe of the compressor 520 via the accumulator 525. A first secondary port of the four-way switching valve 524 is connected to a gas inlet and outlet pipe of the water heat exchanger 506, and a second secondary port of the four-way switching valve 524 is connected to a gas inlet and outlet pipe of air heat exchanger 522. A first port of the expansion valve 523 is connected to a liquid inlet and outlet pipe of the water heat exchanger 506, and a second port of the expansion valve 523 is connected to a liquid inlet and outlet pipe of the air heat exchanger 522. Additionally, a fan 533 is attached to the air heat exchanger 522.

Next, floor heating operations of the floor heating device 500 will be described. First, the four-way switching valve 524 is switched to the state depicted by solid lines in FIG. 1, and the compressor 520 is driven. As a result, the refrigerant discharged from the compressor 520 sequentially flows to the four-way switching valve 524, the water heat exchanger 506, the expansion valve 523, the air heat exchanger 522, and back to the four-way switching valve 524. At this time, the water heat exchanger 506 functions as a condenser and the air heat exchanger 522 functions as an evaporator. Upon driving the circulation pump 508 in this state, the hot water in the expansion tank 507 flows into the piping 511 through the header 509, circulates through the hot water circulation pipe 505, and flows back through the piping 512. The hot water that has returned to the piping 512 flows through the header 510 and then through a heat exchange path of the water heat exchanger 506. At this time, the hot water, flowing through the heat exchange path of the water heat exchanger 506 that is functioning as a condenser, is heated, and this heated hot water is supplied to the expansion tank 507 from the water heat exchanger 506. The floor heater 503 is warmed up as a result of the circulation of the hot water described above. Note that, with this floor heating device 500, it is possible to switch the four-way switching valve 524 from the state illustrated in FIG. 1 and drive the compressor 520. In this case, the first secondary port of the four-way switching valve 524 is connected to the gas inlet and outlet pipe of the air heat exchanger 522, and the second secondary port of the four-way switching valve 524 is connected to the gas inlet and outlet pipe of water heat exchanger 506. Accordingly, the refrigerant discharged from the compressor 520 sequentially flows to the four-way switching valve 524, the air heat exchanger 522, the expansion valve 523, the water heat exchanger 506, and back to the four-way switching valve 524. If configured such that the air heat exchanger 522 functions as a condenser and the water heat exchanger 506 functions as an evaporator, the hot water will be cooled and, as such, it will be possible to perform floor cooling operation.

The floor heating device 500 includes an electrical component section 590 that controls the floor heating operations described above. The electrical component section 590 includes a printed board 591 on which a control circuit is mounted. The control circuit controls the various components of the floor heating device 500. A connector 592 to which the IC cartridge 200 removably mounted is attached to the printed board 591. Additionally, the floor heating device 500 is provided with a remote controller 580 connected to the printed board 591. This electrical component section 590 is disposed in the heat pump unit 502.

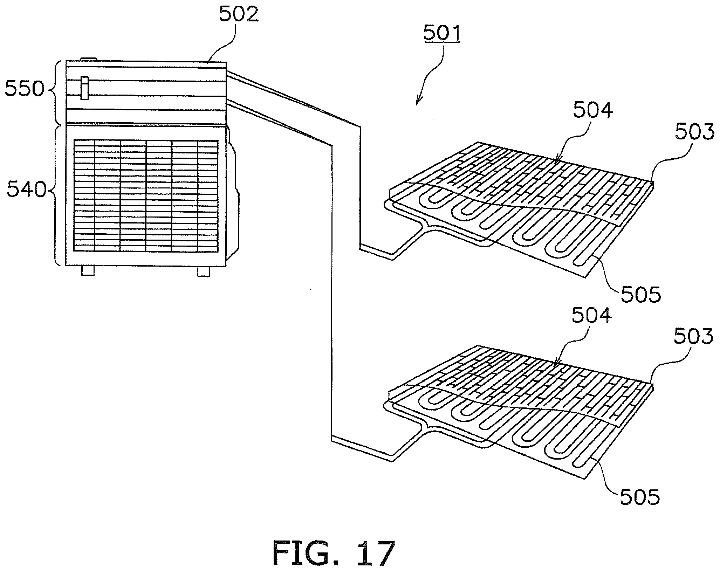

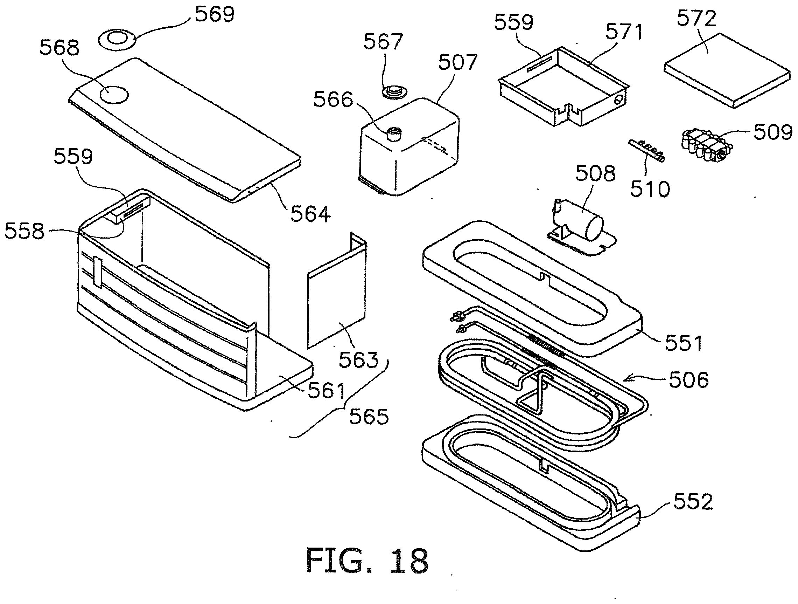

The heat pump unit 502 has a rectangular parallelepiped appearance and, as illustrated in FIG. 17, is divided into an air heat exchange portion 540 and a water heat exchange portion 550. The printed board 591 of the electrical component section 590 described above is installed in an electrical component box 571 disposed in the water heat exchange portion 550 illustrated in FIG. 18.

As illustrated in FIG. 18, the water heat exchange portion 550 has a main body casing 565 including, for example, a bottom frame 561 obtained by partially integrating a bottom plate with side face plates, a piping cover 563, and a top plate 564. The water heat exchanger 506, the expansion tank 507, the circulation pump 508, the headers 509 and 510, and other hot water circuit components are stored in the main body casing 565. In one example, the water heat exchanger 506 is configured as a double pipe heat exchanger. This water heat exchanger 506 is covered by a thermal insulation assembly made from a lower thermal insulating member 551 and an upper thermal insulating member 552, to be insulated from the surrounding components.

The top face of the expansion tank 507 has a water supply port 566 for supplying and replenishing water to the hot water circuit at the time of construction. Additionally, a tank cap 567 for closing this water supply port 566 is attached to the water supply port 566. The top plate 564 has a water supply opening 568 at a location corresponding to the water supply port 566 of the expansion tank 507. Additionally, a water supply opening lid 569 for closing this water supply opening 568 is attached to the water supply opening 568. The circulation pump 508 is attached and fixed to the bottom frame 561.

The electrical component box 571 that houses the electrical components including the printed board 591, on which the control circuit that controls the various components of the floor heating device 500 is mounted, is installed in the bottom frame 561. The electrical component box 571 has a drip-proof plate 572 attached to the upper face thereof. This drip-proof plate prevents the intrusion of water from outside.

### (13) Sharing of Wireless Adapter Functions by Electrical Component Section 590

In the floor heating device 500 as well, a configuration is possible in which, among the plurality of electrical components in the electrical component section 590, the part of the plurality of electrical components that constitutes the switch functions, the display functions, and the power supply functions of the wireless adapter that adds the wireless function is disposed in the electrical component section 590. In one example, the floor heating device 500 includes a power supply unit 593 as an electrical component that constitutes the power supply functions. Moreover, a configuration is possible in which, while the IC cartridge 200 is inserted into the connector 150, the IC cartridge 200 is circuit connected to the electrical component section 590, and the IC cartridge 200 and the electrical component section 590 cooperate to demonstrate the functions of the wireless adapter.

With this floor heating device 500, the plurality of electrical components that constitutes the switch functions, the display functions, and the power supply functions of the wireless adapter, namely the power supply unit 593 and the like, are disposed in the electrical component section 590. As a result, the number of electrical components of the IC cartridge 200 can be reduced and the IC cartridge 200 can be simplified and miniaturized. Thus, the part of the electrical components needed to add the wireless function are disposed in the electrical component section 590 and, as a result, the IC cartridge 200 of the floor heating device 500 can be made inexpensive and easy-to-handle.

### (14) Sharing of Wireless Adapter Functions by Remote Controller 580

The heat pump unit 502 is provided with a remote controller 580 that is capable of sending and receiving data to and from the electrical component section 590. The part of the plurality of electrical components that constitutes the switch functions and the display functions of the wireless adapter is disposed in the remote controller 580 of the heat pump unit 502. While the IC cartridge 200 is inserted into the connector 150, the IC cartridge 200 is circuit connected to the electrical component section 590, and the IC cartridge 200, the electrical component section 590, and the remote controller 580 cooperate to demonstrate the functions of the wireless adapter. For example, a liquid crystal display 581 of the remote controller 580 may be commonly used as an electrical component that constitutes display functions of the wireless adapter. Additionally, buttons 582 of the remote controller 580 may be commonly used as electrical components that constitute switch functions of the wireless adapter. As a result of this configuration, the part of the plurality of electrical components that constitutes the switch functions and the display functions of the wireless adapter is disposed in the remote controller 580. As a result, the number of electrical components of the IC cartridge 200 can be reduced and the IC cartridge 200 can be simplified and miniaturized. Thus, the part of the electrical components needed to add the wireless function are disposed in the remote controller 580 and, as a result, the IC cartridge 200 of the floor heating device 500 can be made inexpensive and easy-to-handle.

### (15) Sharing of Wireless Adapter Functions by Smartphone 6

With the heat pump unit 502 as well, the IC cartridge 200 is configured to be capable of sending and receiving data to and from the smartphone 6. Moreover, the switch functions and the display functions of the wireless adapter are partially realized by the smartphone 6. The touchscreen 6a of the smartphone 6, for example, may also be used as an electrical component that constitutes display functions of the wireless adapter. Additionally, the touchscreen 6a of the smartphone 6 may also be used as an electrical component that constitutes switch functions of the wireless adapter. The part of the plurality of electrical components that constitutes the switch functions and the display functions of the wireless adapter is disposed in the smartphone 6. As a result, the number of electrical components of the IC cartridge 200 can be reduced and the IC cartridge 200 can be simplified and miniaturized. Thus, the part of the electrical components needed to add the wireless function are disposed in the smartphone 6 and, as a result, the IC cartridge 200 of the heat pump unit 502 can be made inexpensive and easy-to-handle.

### (16) Mounting Portion of IC cartridge 200

The main body casing 565 includes an outer lid 557 and an inner wall 558. The outer lid 557 and the inner wall 558 are disposed on the left side face of the main body casing 565 (see FIG. 16). The inner wall 558 and the electrical component box 571 include a slot entrance 559. The IC cartridge 200 is inserted and removed using the slot entrance 559. A workspace WS is formed between the outer lid 557 and the inner wall 558. The main body casing 565 is configured such that, while the IC cartridge 200 is inserted into the connector 150, the second edge portion 212 of the IC cartridge 200 protrudes into the workspace WS, which is covered by the outer lid 557. A worker can insert or remove the IC cartridge 200 by opening the outer lid 557 and grasping the second edge portion 212 by hand, for example. Note that, in cases where the main body casing 565 is formed from metal plates, the outer lid 557 is formed from, for example, a resin plate through which radio waves can pass in order to allow the IC cartridge 200 to send and receive radio waves. In such cases, it is preferable that the inner wall 558 also be formed from resin through which radio waves can pass.

### Fourth Embodiment

### (17) Overview of Hot Water Supply System

Next, a hot water supply system is given as an example of an environment adjusting device according to a fourth embodiment of the present invention. The hot water supply system according to the fourth embodiment is configured to send and receive a portion or all of information used to adjust the indoor environment by inserting the IC cartridge 200 described above. Examples of such information include whether or not to supply hot water, whether or not to fill a bathtub with hot water, whether or not to reheat the water in a bathtub, and the temperature setting of the hot water supply temperature.

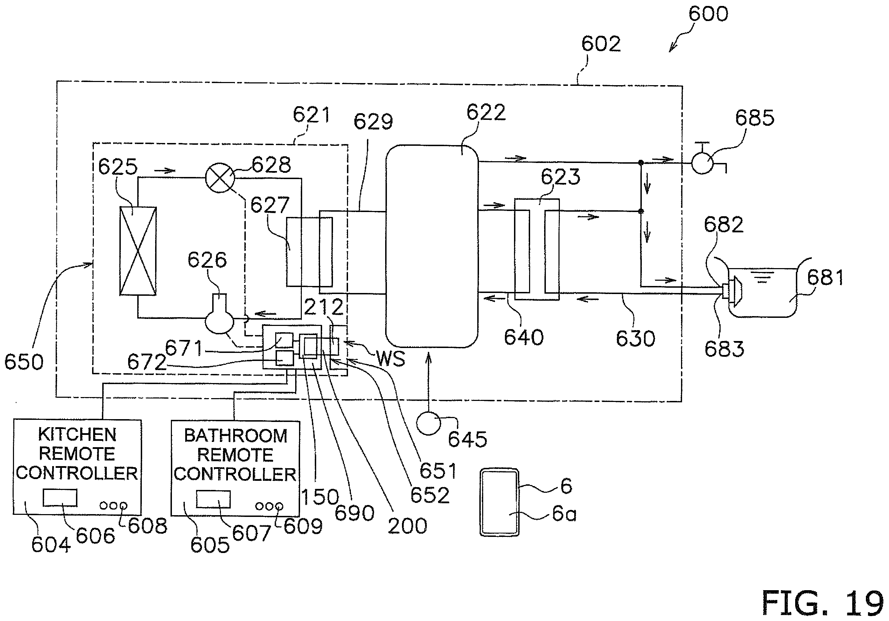

FIG. 19 illustrates a configuration of a hot water supply system 600 according to the fourth embodiment. The hot water supply system 600 of FIG. 19 is installed in a residence, and includes a water heater 602, a kitchen remote controller 604, and a bathroom remote controller 605. This hot water supply system 600 can supply heated water to a bathtub faucet 682 of a bathtub 681 installed in a bathroom of a residence, and to a water faucet 685 installed in a kitchen or the like.

### (18) Configuration of Water Heater 602

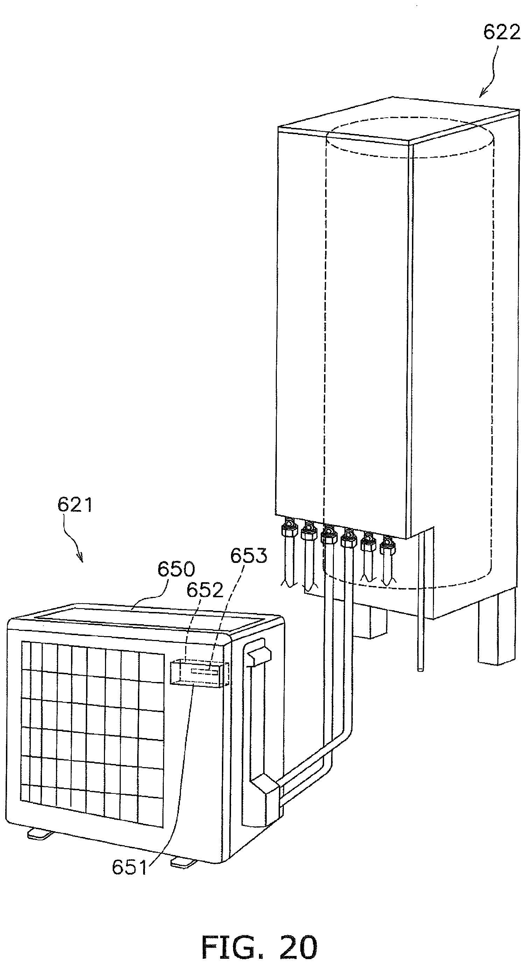

The water heater 602 includes a heat pump unit 621, a hot water storage tank 622, and a second water heat exchanger 623. FIG. 20 illustrates the appearance of the heat pump unit 621 and the hot water storage tank 622. The heat pump unit 621 includes an air heat exchanger 625, a compressor 626, a first water heat exchanger 627, and an expansion valve 628. These components are sequentially connected to form a refrigeration circuit. The heat pump unit 621 pumps up heat in the atmosphere in the air heat exchanger 625 and transfers the heat to a refrigerant. The refrigerant is compressed in the compressor 626, and the heat of the high-temperature refrigerant is transferred to water flowing through piping 629 in the first water heat exchanger 627. The refrigerant is decompressed and the temperature thereof is lowered at the expansion valve 628 and, then, the low-temperature refrigerant is sent to the air heat exchanger 625.

Water is supplied into the hot water storage tank 622 from a water supply source 645. The water supplied into the hot water storage tank 622 is sent to the piping 629 and boiled in the first water heat exchanger 627. Thus, hot water is made. In accordance with the demand of a user using the water heater 602, the (hot) water stored in the hot water storage tank 622 is supplied to the water faucet 685 and/or supplied to the bathtub 681. Additionally, in accordance with the demand of a user, the water in the bathtub 681 is sent from a bathtub recovery port of 683 of the bathtub 681 through a bathtub circulation path 630 to the second water heat exchanger 623, and thereafter returned back into the bathtub 681 through the bathtub faucet 682. At this time, the water in the hot water storage tank 622 is sent through a hot water storage tank circulation path 640 to the second water heat exchanger 623 and, thereafter returned back into the hot water storage tank 622. Thus, the water in the bathtub 681 is warmed up as a result of being subjected to heat exchange with the high-temperature water in the hot water storage tank 622 by the second water heat exchanger 623 (reheating operation).

A microcomputer 671 configured from a CPU, ROM, and the like is installed in a main body casing 650 of the heat pump unit 621. The microcomputer 671 controls the various functional components in the heat pump unit 621, and also controls the boiling operations, bathtub filing operations, reheating operations, and the like on the basis of detection results of a water level sensor (not illustrated in the drawings) and a temperature detecting thermistor (not illustrated in the drawings) disposed in the hot water storage tank 622. Additionally, the microcomputer 671 is also connected to the kitchen remote controller 604 and the bathroom remote controller 605, and outputs information related to the water heater 602 to the kitchen remote controller 604 and the bathroom remote controller 605. Examples of the information related to the water heater 602 include information indicating whether or not the water heater 602 is currently performing the various operations such as bathtub filling operations or reheating operations, information indicating the amount of hot water remaining in the hot water storage tank 622, and the current temperature and amount of water in the bathtub 681.

For the convenience of the user, the kitchen remote controller 604 is installed on a wall of the kitchen of the residence of the user. The kitchen remote controller 604 is used to remotely control the water heater 602, and is connected to the microcomputer 671 of the water heater 602. Examples of functions of the kitchen remote controller 604 include configuration functions such as whether or not to supply hot water, whether or not to fill a bathtub, whether or not to reheat the water in a bathtub, and the hot water supply temperature; and guidance functions for notifying that the bathtub filling operation has completed, the reheating operation has completed, the amount of hot water in the hot water storage tank 622 has changed, and the like.

Similar to the kitchen remote controller 604, the bathroom remote controller 605 is used to remotely control the water heater 602, and is installed on a wall in a bathroom of a residence. The bathroom remote controller 605 also has the configuration functions and guidance functions described above.

### (19) Sharing of Wireless Adapter Functions by Electrical Component Section 690

In the hot water supply system 600 as well, a configuration is possible in which, among the plurality of electrical components in the electrical component section 690, the part of the plurality of electrical components that constitutes the switch functions, the display functions, and the power supply functions of the wireless adapter that adds the wireless function is disposed in the electrical component section 690. In one example, the hot water supply system 600 includes a power supply unit 672 as an electrical component that constitutes the power supply functions. Moreover, a configuration is possible in which, while the IC cartridge 200 is inserted into the connector 150, the IC cartridge 200 is circuit connected to the electrical component section 690, and the IC cartridge 200 and the electrical component section 690 cooperate to demonstrate the functions of the wireless adapter.

With this hot water supply system 600, the plurality of electrical components that constitutes the switch functions, the display functions, and the power supply functions of the wireless adapter, namely the power supply unit 672 and the like, are disposed in the electrical component section 690. As a result, the number of electrical components of the IC cartridge 200 can be reduced and the IC cartridge 200 can be simplified and miniaturized. Thus, the part of the electrical components needed to add the wireless function are disposed in the electrical component section 690 and, as a result, the IC cartridge 200 of the hot water supply system 600 can be made inexpensive and easy-to-handle.

### (20) Sharing of Wireless Adapter Functions by Electrical Component Section 690

In the hot water supply system 600 as well, a configuration is possible in which, among the plurality of electrical components in the electrical component section 690, the part of the plurality of electrical components that constitutes the switch functions, the display functions, and the power supply functions of the wireless adapter that adds the wireless function is disposed in the electrical component section 690. In one example, the hot water supply system 600 includes a power supply unit 672 as an electrical component that constitutes the power supply functions. Moreover, a configuration is possible in which, while the IC cartridge 200 is inserted into the connector 150, the IC cartridge 200 is circuit connected to the electrical component section 690, and the IC cartridge 200 and the electrical component section 690 cooperate to demonstrate the functions of the wireless adapter.

With this hot water supply system 600, the plurality of electrical components that constitutes the switch functions, the display functions, and the power supply functions of the wireless adapter, namely the power supply unit 672 and the like, are disposed in the electrical component section 690. As a result, the number of electrical components of the IC cartridge 200 can be reduced and the IC cartridge 200 can be simplified and miniaturized. Thus, the part of the electrical components needed to add the wireless function are disposed in the electrical component section 690 and, as a result, the IC cartridge 200 of the hot water supply system 600 can be made inexpensive and easy-to-handle.

### (21) Sharing of Wireless Adapter Functions by Remote Controller

The heat pump unit 621 is provided with the kitchen remote controller 604 and the bathroom remote controller 605 that are capable of sending and receiving data to and from the electrical component section 690. The part of the plurality of electrical components that constitutes the switch functions and the display functions of the wireless adapter is disposed in the kitchen remote controller 604 and the bathroom remote controller 605 of the heat pump unit 621. While the IC cartridge 200 is inserted into the connector 150, the IC cartridge 200 is circuit connected to the electrical component section 690, and the IC cartridge 200, the electrical component section 690, the kitchen remote controller 604, and the bathroom remote controller 605 cooperate to demonstrate the functions of the wireless adapter. For example, liquid crystal displays 606, 607 of the kitchen remote controller 604 and the bathroom remote controller 605 may be commonly used das electrical components that constitute display functions of the wireless adapter. Additionally, buttons 608, 609 of the kitchen remote controller 604 and the bathroom remote controller 605 may be commonly used as electrical components that constitute switch functions of the wireless adapter. As a result of this configuration, the part of the plurality of electrical components that constitutes the switch functions and the display functions of the wireless adapter is disposed in the kitchen remote controller 604 and the bathroom remote controller 605. As a result, the number of electrical components of the IC cartridge 200 can be reduced and the IC cartridge 200 can be simplified and miniaturized. Thus, the part of the electrical components needed to add the wireless function are disposed in the kitchen remote controller 604 and the bathroom remote controller 605 and, as a result, the IC cartridge 200 of the heat pump unit 621 can be made inexpensive and easy-to-handle.

### (22) Sharing of Wireless Adapter Functions by Smartphone 6

With the heat pump unit 621 as well, the IC cartridge 200 is configured to be capable of sending and receiving data to and from the smartphone 6. Moreover, the switch functions and the display functions of the wireless adapter are partially realized by the smartphone 6. The touchscreen 6a of the smartphone 6, for example, may also be used as an electrical component that constitutes display functions of the wireless adapter. Additionally, the touchscreen 6a of the smartphone 6 may also be used as an electrical component that constitutes switch functions of the wireless adapter. The part of the plurality of electrical components that constitutes the switch functions and the display functions of the wireless adapter is disposed in the smartphone 6. As a result, the number of electrical components of the IC cartridge 200 can be reduced and the IC cartridge 200 can be simplified and miniaturized. Thus, the part of the electrical components needed to add the wireless function are disposed in the smartphone 6 and, as a result, the IC cartridge 200 of the heat pump unit 621 can be made inexpensive and easy-to-handle.

### (23) Mounting Portion of IC cartridge 200

The main body casing 650 includes an outer lid 651 and an inner wall 652. The outer lid 651 and the inner wall 652 are disposed on the front face of the main body casing 650. The inner wall 652 includes a slot entrance 653. The IC cartridge 200 is inserted and removed using the slot entrance 653. A workspace WS is formed between the outer lid 651 and the inner wall 652. The main body casing 650 is configured such that, while the IC cartridge 200 is inserted into the connector 150, the second edge portion 212 of the IC cartridge 200 protrudes into the workspace WS, which is covered by the outer lid 651. A worker can insert or remove the IC cartridge 200 by opening the outer lid 651 and grasping the second edge portion 212 by hand, for example. Note that, in cases where the main body casing 650 is formed from metal plates, the outer lid 651 is formed from, for example, a resin plate through which radio waves can pass in order to allow the IC cartridge 200 to send and receive radio waves. In such cases, it is preferable that the inner wall 652 also be formed from resin through which radio waves can pass.

### Fifth Embodiment

### (24) Overview of Humidity Control Device

Next, a humidity control device is given as an example of an environment adjusting device according to a fifth embodiment of the present invention. The humidity control device according to the fifth embodiment is configured to send and receive a portion or all of information used to adjust the indoor environment by inserting the IC cartridge 200 described above. Examples of such information include whether or not to ventilate, whether or not to adjust humidity, and humidity settings of the indoor humidity.

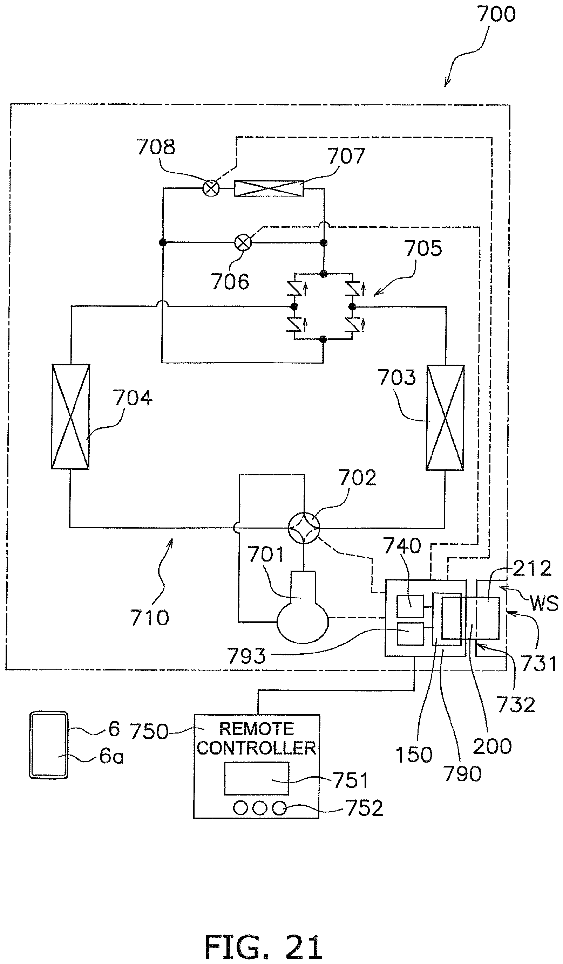

FIG. 21 illustrates a configuration of a humidity control device 700 according to the fifth embodiment. The humidity control device 700 of FIG. 21, the humidity control device 700, includes a compressor 701, a four-way switching valve 702, a first adsorption heat exchanger 703, a second adsorption heat exchanger 704, a bridge circuit 705 including four check valves, a main expansion valve 706, and a refrigeration circuit 710 including a reheating heat exchanger 707, and a reheating expansion valve 708. The humidity control device 700 is configured to be switchable between dehumidification operation to dehumidify a room and humidification operation to humidify a room.

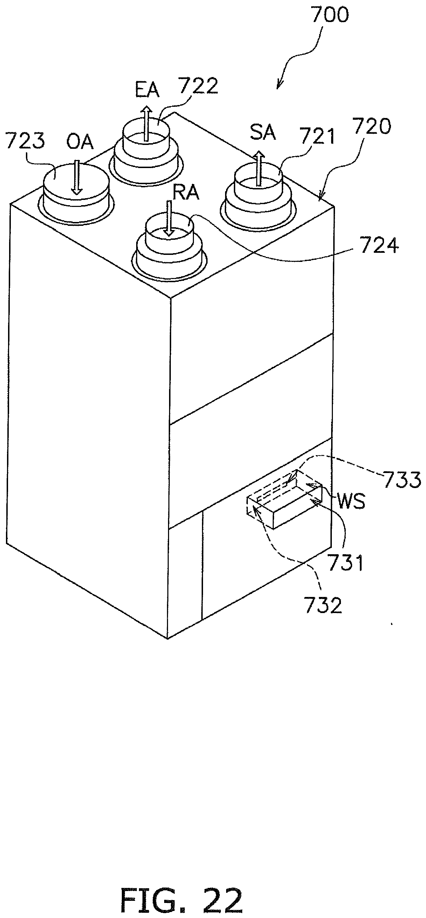

In order to achieve this configuration, as illustrated in FIG. 22, the humidity control device 700 includes a main body casing 720. Additionally, an air supply connection port 721, an exhaust connection port 722, an outdoor air connection port 723, and a room air connection port 724 are provided on a top surface of the main body casing 720. The air supply connection port 721 is for supplying supply air SA, for which humidity has been adjusted, into the room. The exhaust connection port 722 is for exhausting exhaust air EA out of the room. The outdoor air connection port 723 is for acquiring outdoor air OA. The room air connection port 724 is for acquiring room air RA.

### (25) Dehumidification Operation

Dehumidification operation is executed under a condition where outdoor temperature and humidity are comparatively high. During the dehumidification operation, the outdoor air OA is dehumidified and the resulting dehumidified supply air SA is supplied into the room. At the same time, the room air RA is exhausted out of the room as exhaust air EA. The dehumidification operation alternately switches between a first state and a second state at a predetermined interval.

In the refrigeration circuit 710 during the first state of dehumidification operation, the four-way switching valve 702 is set to a first state (the connection state depicted by solid lines), the reheating expansion valve 708 is closed, and the main expansion valve 706 is opened to a predetermined aperture. The refrigerant compressed by the compressor 701 passes from the second adsorption heat exchanger 704, through the bridge circuit 705 and the main expansion valve 706, and then through the bridge circuit 705 again. Then, the refrigerant passes from the first adsorption heat exchanger 703, through the four-way switching valve 702, and back to the compressor 701. The refrigerant compressed by the compressor 701 is condensed by the second adsorption heat exchanger 704 and, as a result, radiates heat. Then, the refrigerant is decompressed by the main expansion valve 706 and is evaporated by the first adsorption heat exchanger 703.

In the first state of dehumidification operation, the outdoor air OA acquired through the outdoor air connection port 723 passes through the reheating heat exchanger 707 and the first adsorption heat exchanger 703. At this time, the water vapor in the air is adsorbed by an adsorbent in the first adsorption heat exchanger 703. The air, which was dehumidified by the first adsorption heat exchanger 703, is supplied into the room through the air supply connection port 721 as supply air SA.

In the first state of dehumidification operation, the room air RA acquired through the room air connection port 724 passes through the second adsorption heat exchanger 704. At this time, water vapor is desorbed from the adsorbent into the air at the second adsorption heat exchanger 704, and the adsorbent is regenerated. The air, which contains the moisture desorbed by the air passing through the second adsorption heat exchanger 704, is exhausted out of the room through the exhaust connection port 722 as exhaust air EA.

In the refrigeration circuit 710 during the second state of dehumidification operation, the four-way switching valve 702 is set to a second state (the connection state depicted by dashed lines), the reheating expansion valve 708 is closed, and the main expansion valve 706 is opened to a predetermined aperture. The refrigerant compressed by the compressor 701 passes from the first adsorption heat exchanger 703, through the bridge circuit 705 and the main expansion valve 706, and then through the bridge circuit 705 again. Then, the refrigerant passes from the second adsorption heat exchanger 704, through the four-way switching valve 702, and back to the compressor 701. The refrigerant compressed by the compressor 701 is condensed by the first adsorption heat exchanger 703 and, as a result, radiates heat. Then, the refrigerant is decompressed by the main expansion valve 706 and is evaporated by the second adsorption heat exchanger 704.

In the second state of dehumidification operation, the outdoor air OA acquired through the outdoor air connection port 723 passes through the reheating heat exchanger 707 and the second adsorption heat exchanger 704. At this time, the water vapor in the air is adsorbed by an adsorbent in the second adsorption heat exchanger 704. The air, which was dehumidified by the second adsorption heat exchanger 704, is supplied into the room through the air supply connection port 721 as supply air SA.

In the second state of dehumidification operation, the room air RA acquired through the room air connection port 724 passes through the first adsorption heat exchanger 703. At this time, water vapor is desorbed from the adsorbent into the air at the first adsorption heat exchanger 703, and the adsorbent is regenerated. The air, which contains the moisture desorbed by the air passing through the first adsorption heat exchanger 703, is exhausted out of the room through the exhaust connection port 722 as exhaust air EA.

### (26) Humidification Operation

Humidification operation is executed when outdoor temperature and humidity are comparatively low. During the humidification operation, the outdoor air OA is humidified and the resulting humidified supply air SA is supplied into the room. At the same time, the room air RA is exhausted out of the room as exhaust air EA. The humidification operation alternately switches between a first state and a second state at a predetermined interval.

In the refrigeration circuit 710 during the first state of humidification operation, the four-way switching valve 702 is set to a second state (the connection state depicted by dashed lines), the main expansion valve 706 is closed, and the reheating expansion valve 708 is opened to a predetermined aperture. The refrigerant compressed by the compressor 701 passes from the first adsorption heat exchanger 703, through the bridge circuit 705 and the reheating expansion valve 708, and then through the bridge circuit 705 again. Then, the refrigerant passes from the second adsorption heat exchanger 704, through the four-way switching valve 702, and back to the compressor 701.

The refrigerant radiates heat in the first adsorption heat exchanger 703. Then, at the reheating heat exchanger 707, the high-pressure refrigerant in a gas-liquid two-phase state radiates heat into the outdoor air OA. The refrigerant is decompressed by the reheating expansion valve 708 and is evaporated by the second adsorption heat exchanger 704.

In the first state of humidification operation, the outdoor air OA acquired through the outdoor air connection port 723 passes through the reheating heat exchanger 707 and the first adsorption heat exchanger 703. At this time, the outdoor air OA is heated by the reheating heat exchanger 707 and, at the first adsorption heat exchanger 703 that is functioning as a radiator, water vapor is desorbed from the adsorbent into the air. The air, which was humidified by the first adsorption heat exchanger 703, is supplied into the room through the air supply connection port 721 as supply air SA.

In the first state of humidification operation, the room air RA acquired through the room air connection port 724 passes through the second adsorption heat exchanger 704. At this time, water vapor in the air is adsorbed into an adsorbent at the second adsorption heat exchanger 704, and moisture is imparted to this adsorbent. The air, which has imparted moisture to the adsorbent by passing through the second adsorption heat exchanger 704, is exhausted out of the room through the exhaust connection port 722 as exhaust air EA.

In the refrigeration circuit 710 during the second state of humidification operation, the four-way switching valve 702 is set to a first state (the connection state depicted by solid lines), the main expansion valve 706 is closed, and the reheating expansion valve 708 is opened to a predetermined aperture. The refrigerant compressed by the compressor 701 passes from the second adsorption heat exchanger 704, through the bridge circuit 705, the reheating heat exchanger 707 and the reheating expansion valve 708, and then through the bridge circuit 705 again. Then, the refrigerant passes from the first adsorption heat exchanger 703, through the four-way switching valve 702, and back to the compressor 701.

The refrigerant radiates heat in the second adsorption heat exchanger 704. Then, at the reheating heat exchanger 707, the high-pressure refrigerant in a gas-liquid two-phase state radiates heat into the outdoor air OA. The refrigerant is decompressed by the reheating expansion valve 708 and is evaporated by the first adsorption heat exchanger 703.

In the second state of humidification operation, the outdoor air OA acquired through the outdoor air connection port 723 passes through the reheating heat exchanger 707 and the second adsorption heat exchanger 704. At this time, the outdoor air OA is heated by the reheating heat exchanger 707 and, at the second adsorption heat exchanger 704 that is functioning as a radiator, water vapor is desorbed from the adsorbent into the air. The air, which was humidified by the second adsorption heat exchanger 704, is supplied into the room through the air supply connection port 721 as supply air SA.

In the second state of humidification operation, the room air RA acquired through the room air connection port 724 passes through the first adsorption heat exchanger 703. At this time, water vapor in the air is adsorbed into an adsorbent at the first adsorption heat exchanger 703, and moisture in the air is imparted to this adsorbent. The air, which has imparted moisture to the adsorbent by passing through the first adsorption heat exchanger 703, is exhausted out of the room through the exhaust connection port 722 as exhaust air EA.

### (27) Control of Humidity Control Device 700

As illustrated in FIG. 21, the humidity control device 700 is provided with a microcomputer 740 including a CPU and ROM, and various sensors. The microcomputer 740 adjusts the operating capacity of the compressor 701 and the apertures of the main expansion valve 706 and the reheating expansion valve 708 in accordance with operating conditions and the detection results of a plurality of humidity sensors (not illustrated in the drawings) and a plurality of temperature sensors (not illustrated in the drawings). Additionally, the microcomputer 740 adjusts open/close states of a plurality of dampers (not illustrated in the drawings) and air volumes of a plurality of fans (not illustrated in the drawings) in accordance with operating conditions. The microcomputer 740 calculates the humidity control capability (dehumidification load during dehumidification operation and humidification load during humidification operation) needed by the humidity control device 700 on the basis of detection values from the various sensors. Moreover, the microcomputer 740 controls the operating frequency of the compressor 701 so as to meet this humidity control capability.

### (28) Sharing of Wireless Adapter Functions by Electrical Component Section 790

In the humidity control device 700 as well, a configuration is possible in which, among the plurality of electrical components in the electrical component section 790, the part of the plurality of electrical components that constitutes the switch functions, the display functions, and the power supply functions of the wireless adapter that adds the wireless function is disposed in the electrical component section 790. In one example, the humidity control device 700 includes a power supply unit 793 as an electrical component that constitutes the power supply functions. Moreover, a configuration is possible in which, while the IC cartridge 200 is inserted into the connector 150, the IC cartridge 200 is circuit connected to the electrical component section 790, and the IC cartridge 200 and the electrical component section 790 cooperate to demonstrate the functions of the wireless adapter.

With this humidity control device 700, the plurality of electrical components that constitutes the switch functions, the display functions, and the power supply functions of the wireless adapter, namely the power supply unit 793 and the like, are disposed in the electrical component section 790. As a result, the number of electrical components of the IC cartridge 200 can be reduced and the IC cartridge 200 can be simplified and miniaturized. Thus, the part of the electrical components needed to add the wireless function are disposed in the electrical component section 790 and, as a result, the IC cartridge 200 of the humidity control device 700 can be made inexpensive and easy-to-handle.

### (29) Sharing of Wireless Adapter Functions by Electrical Component Section 790

In the humidity control device 700 as well, a configuration is possible in which, among the plurality of electrical components in the electrical component section 790, the plurality of electrical components that constitutes the switch functions, the display functions, and the power supply functions of the wireless adapter that adds the wireless function is partially disposed in the electrical component section 790. In one example, the humidity control device 700 includes a power supply unit 793 as an electrical component that constitutes the power supply functions. Moreover, a configuration is possible in which, while the IC cartridge 200 is inserted into the connector 150, the IC cartridge 200 is circuit connected to the electrical component section 790, and the IC cartridge 200 and the electrical component section 790 cooperate to demonstrate the functions of the wireless adapter.

With this humidity control device 700, the plurality of electrical components that constitutes the switch functions, the display functions, and the power supply functions of the wireless adapter, namely the power supply unit 793 and the like, are disposed in the electrical component section 790. As a result, the number of electrical components of the IC cartridge 200 can be reduced and the IC cartridge 200 can be simplified and miniaturized. Thus, the part of the electrical components needed to add the wireless function are disposed in the electrical component section 790 and, as a result, the IC cartridge 200 of the humidity control device 700 can be made inexpensive and easy-to-handle.

### (30) Sharing of Wireless Adapter Functions by Remote Controller

The humidity control device 700 is provided with a remote controller 750 that is capable of sending and receiving data to and from the electrical component section 790. The part of the plurality of electrical components that constitutes the switch functions and the display functions of the wireless adapter is disposed in the remote controller 750 of the humidity control device 700. While the IC cartridge 200 is inserted into the connector 150, the IC cartridge 200 is circuit connected to the electrical component section 790, and the IC cartridge 200, the electrical component section 790, and the remote controller 750 cooperate to demonstrate the functions of the wireless adapter. For example, the remote controller 750 may include a liquid crystal display 751 as an electrical component that constitutes display functions of the wireless adapter. Additionally, the remote controller 750 may include buttons 752 as electrical components that constitute switch functions of the wireless adapter. As a result of this configuration, the part of the plurality of electrical components that constitutes the switch functions and the display functions of the wireless adapter is disposed in the remote controller 750. As a result, the number of electrical components of the IC cartridge 200 can be reduced and the IC cartridge 200 can be simplified and miniaturized. Thus, the part of the electrical components needed to add the wireless function are disposed in the remote controller 750 and, as a result, the IC cartridge 200 of the humidity control device 700 can be made inexpensive and easy-to-handle.

### (31) Sharing of Wireless Adapter Functions by Smartphone 6

With the humidity control device 700 as well, the IC cartridge 200 is configured to be capable of sending and receiving data to and from the smartphone 6. Moreover, the switch functions and the display functions of the wireless adapter are partially realized by the smartphone 6. The touchscreen 6a of the smartphone 6, for example, may also be used as an electrical component that constitutes display functions of the wireless adapter. Additionally, the touchscreen 6a of the smartphone 6 may also be used as an electrical component that constitutes switch functions of the wireless adapter. The part of the plurality of electrical components that constitutes the switch functions and the display functions of the wireless adapter is disposed in the smartphone 6. As a result, the number of electrical components of the IC cartridge 200 can be reduced and the IC cartridge 200 can be simplified and miniaturized. Thus, the part of the electrical components needed to add the wireless function are disposed in the smartphone 6 and, as a result, the IC cartridge 200 of the humidity control device 700 can be made inexpensive and easy-to-handle.

### (32) Mounting Portion of IC cartridge 200

The main body casing 720 includes an outer lid 731 and an inner wall 732. The outer lid 731 and the inner wall 732 are disposed on the front face of the main body casing 720. The inner wall 732 includes a slot entrance 733. The IC cartridge 200 is inserted and removed using the slot entrance 733. A workspace WS is formed between the outer lid 731 and the inner wall 732. The main body casing 720 is configured such that, while the IC cartridge 200 is inserted into the connector 150, the second edge portion 212 of the IC cartridge 200 protrudes into the workspace WS, which is covered by the outer lid 731. A worker can insert or remove the IC cartridge 200 by opening the outer lid 731 and grasping the second edge portion 212 by hand, for example. Note that, in cases where the main body casing 720 is formed from metal plates, the outer lid 731 is formed from, for example, a resin plate through which radio waves can pass in order to allow the IC cartridge 200 to send and receive radio waves. In such cases, it is preferable that the inner wall 732 also be formed from resin through which radio waves can pass.

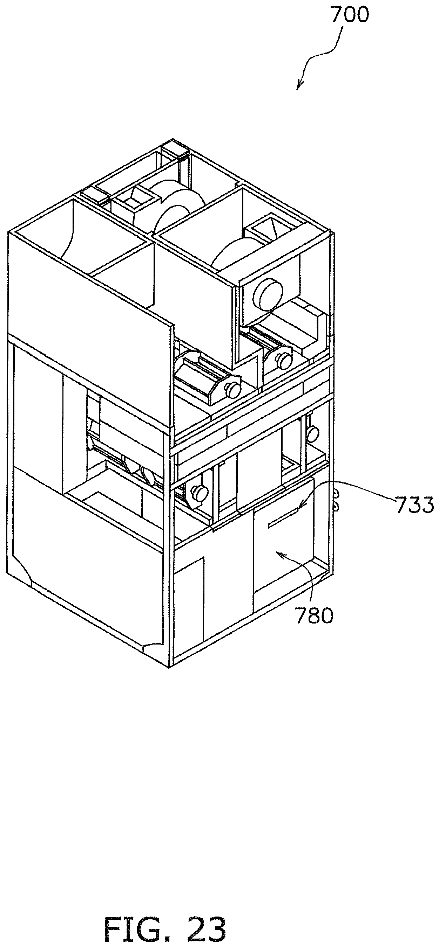

FIG. 23 illustrates the humidity control device 700 illustrated in FIG. 22, in a state in which metal plates on the periphery of the main body casing 720 have been removed. The humidity control device 700 includes an electrical component box 780 in the main body casing 720. The microcomputer 740, the power supply unit 793, and the connector 150 are housed in the electrical component box 780. This electrical component box 780 also has a slot entrance 733 used for inserting and removing the IC cartridge 200.

### (33) Features

### (33-1)

In the second to fifth embodiments described above, with the IC cartridge 200, the insulating case 210 covers the entirety of the electric circuit 220, including the wireless IC chip 250 and the antenna 230. As such, when a worker grasps the IC cartridge 200 by hand and inserts or removes the connection terminals 203 into or from the connector 150, the hand of the worker will not contact the electric circuit 220 after the connection terminals 203 have been connected to the connector 150. As a result, the IC cartridge 200 can be safely handled. Additionally, the insulating case 210 is supported by each of the environment adjusting devices, namely the air cleaner 400, the floor heating device 500, the hot water supply system 600, and the humidity control device 700, as a result of the connection terminals 203 being inserted into the connector 150. Moreover, the insulating case 210 separates from each of the air cleaner 400, the floor heating device 500, the hot water supply system 600, and the humidity control device 700 as a result of the connection terminals 203 being removed from the connector 150. Accordingly, the attaching work and removing work of the IC cartridge 200 is facilitated, thereby eliminating the work involved in adding the wireless function. As a result, it is not necessary for the wireless adapter to be built in. Furthermore, in some cases, the need to receive wireless certification for each of the air cleaner 400, the floor heating device 500, the hot water supply system 600, and the humidity control device 700 may be eliminated, and only wireless certification for the IC cartridge 200 may be required. Typically, in many cases, it is easier to receive wireless certification for the IC cartridge 200 than to receive wireless certification for each of the air cleaner 400, the floor heating device 500, the hot water supply system 600, and the humidity control device 700. Specifically, in the case that the IC cartridge 200 is upgraded, it is only necessary to receive certification for the newly upgraded IC cartridge 200, and this authorized IC cartridge 200 can simply be mounted in each of the air cleaner 400, the floor heating device 500, the hot water supply system 600, and the humidity control device 700. As a result, the wireless function can be easily upgraded. Thus, it is clear that wireless function can be inexpensively added to an environment adjusting device by using the IC cartridge 200.

### (33-2)

In the IC cartridge 200 of the second to fifth embodiments as well, as in the first embodiment, the connection terminals 203 are inserted into the connector 150 as a result of the insulating case 210 being moved in the direction toward the connector 150. Additionally, with the IC cartridge 200, at least the wireless IC chip 250 is housed in the air cleaner 400, the floor heating device 500, the hot water supply system 600, or the humidity control device 700 while the connection terminals 203 are inserted into the connector 150. Furthermore, the IC cartridge 200 is configured such that the connection terminals 203 are removed from the connector 150 as a result of the insulating case 210 being moved in the direction away from the connector 150.

As a result, the IC cartridge 200 can be easily inserted into and removed from the air cleaner 400, the floor heating device 500, the hot water supply system 600, or the humidity control device 700. Additionally, the wireless IC chip 250 can be easily housed in the air cleaner 400, the floor heating device 500, the hot water supply system 600, or the humidity control device 700 while the connection terminals 203 are inserted into the connector 150. Accordingly, maintenance of the IC cartridge 200, improvement of the functions of the IC cartridge 200, and correction of defects of the IC cartridge 200 can be easily performed, and sufficient protection functions for the wireless IC chip 250 can be obtained.

### (33-3)

In the second to fifth embodiments, each of the environment adjusting devices, namely the air cleaner 400, the floor heating device 500, the hot water supply system 600, and the humidity control device 700, is provided with the IC cartridge 200. There are, for example, cases in which wireless certification is required to add wireless function to one or a combination of the air cleaner 400, the floor heating device 500, the hot water supply system 600, and the humidity control device 700, regardless of different protocols being used in each country. There are cases where it is possible to receive wireless certification for one or a combination of the air cleaner 400, the floor heating device 500, the hot water supply system 600, and the humidity control device 700, and also cases where it is possible to receive certification for the IC cartridge 200. In such cases, if wireless certification is received for one or a combination of the air cleaner 400, the floor heating device 500, the hot water supply system 600, and the humidity control device 700, there may be a need to re-apply for wireless certification of one or a combination of the air cleaner 400, the floor heating device 500, the hot water supply system 600, and the humidity control device 700 when upgrading the wireless function. In contrast, if wireless certification is received for the IC cartridge 200, the wireless function of the one or a combination of the air cleaner 400, the floor heating device 500, the hot water supply system 600, and the humidity control device 700 can be upgraded simply by replacing the old IC cartridge 200 with the upgraded IC cartridge 200. Thus, the wireless function can be inexpensively upgraded. By combining this with the feature described above in (33-1), the wireless function of the one or a combination of the air cleaner 400, the floor heating device 500, the hot water supply system 600, and the humidity control device 700 can be inexpensively and safely added using the IC cartridge 200.

### (33-4)

The air cleaner 400, the floor heating device 500, the hot water supply system 600, and the humidity control device 700 of the second to fifth embodiments are respectively provided in the main body casings 410, 565, 650, and 720, and include the electrical component sections 490, 590, 690, and 790a, a plurality of electrical components being installed in each of the electrical component sections 490, 590, 690, and 790. The part of the plurality of electrical components that constitutes the switch functions, the display functions, and the power supply functions of the wireless adapter that adds the wireless function is disposed in each of the electrical component sections 490, 590, 690, and 790. In one example, as illustrated in FIG. 13, the air cleaner 400 includes buttons 421 disposed on the operation panel 420 as electrical components that constitute the switch functions. Additionally, the air cleaner 400 includes a liquid crystal display device 422 disposed on the operation panel 420 as an electrical component that constitutes the display functions. Furthermore, the air cleaner 400, the floor heating device 500, the hot water supply system 600, and the humidity control device 700 respectively include the power supply unit 427, 593, 672, and 793 as an electrical component that constitutes the power supply functions. Moreover, while the IC cartridge 200 is inserted into the connector 150, the IC cartridge 200 is circuit connected to each of the electrical component sections 490, 590, 690, and 790, and the IC cartridge 200 and the electrical component section 100 cooperate to demonstrate the functions of the wireless adapter.

Thus, with the air cleaner 400, the floor heating device 500, the hot water supply system 600, and the humidity control device 700, the part of the plurality of electrical components that constitutes the switch functions, the display functions, and the power supply functions of the wireless adapter, is disposed in the electrical component sections 490, 590, 690, and 790. As a result, the number of electrical components of the IC cartridge 200 can be reduced and the IC cartridge 200 can be simplified and miniaturized. Thus, the part of the electrical components needed to add the wireless function are disposed in the electrical component section 100 and, as a result, the IC cartridge 200 of the air conditioner 1 can be made inexpensive and easy-to-handle.

### (33-5)

The air cleaner 400, the floor heating device 500, the hot water supply system 600, and the humidity control device 700 described in the second to fifth embodiments respectively include the remote controllers 430, 580, 604, 605, and 750, which are capable of sending and receiving data to and from the electrical component sections 490, 590, 690, and 790. The part of the plurality of electrical components that constitutes the switch functions and the display functions of the wireless adapter is disposed in the remote controllers 430, 580, 604, 605, and 750 of the air cleaner 400, the floor heating device 500, the hot water supply system 600, and the humidity control device 700 described in the second to fifth embodiments, respectively. While the IC cartridge 200 is inserted into the connector 150, the IC cartridge 200 is circuit connected to each of the electrical component sections 490, 590, 690, and 790, and the IC cartridge 200, the electrical component sections 490, 590, 690, and 790, and the remote controllers 430, 580, 604, 605, and 750 respectively cooperate to demonstrate the functions of the wireless adapter. Specifically, the liquid crystal display devices 422, 581, 606, 607, and 751 of the remote controllers 430, 580, 604, 605, and 750 are electrical components that constitute display functions of the wireless adapter. Additionally, the remote controllers 430, 580, 604, 605, and 750 include the buttons 435, 582, 608, 609, and 752 as electrical components that constitute switch functions of the wireless adapter.

Thus, the part of the plurality of electrical components that constitutes the switch functions and the display functions of the wireless adapter is disposed in the remote controllers 430, 580, 604, 605, and 750. As a result, the number of electrical components of the IC cartridge 200 can be reduced and the IC cartridge 200 can be simplified and miniaturized. Thus, the part of the electrical components needed to add the wireless function are disposed in the remote controller 5 and, as a result, the IC cartridge 200 of the air cleaner 400, the floor heating device 500, the hot water supply system 600, and the humidity control device 700 can be made inexpensive and easy-to-handle.

### (33-6)

With the air cleaner 400, the floor heating device 500, the hot water supply system 600, and the humidity control device 700 described above in the second to fifth embodiments, the IC cartridge 200 is configured to be capable of sending and receiving data to and from the smartphone 6. Moreover, the switch functions and the display functions of the wireless adapter are partially realized by the smartphone 6. Specifically, in Modification Example 1D, the touchscreen 6a of the smartphone 6 is an electrical component that constitutes a display function of the wireless adapter. Additionally, the touchscreen 6a of the smartphone 6 is an electrical component that constitutes switch functions of the wireless adapter.

As a result, the part of the plurality of electrical components that constitutes the switch functions and the display functions of the wireless adapter is disposed in the smartphone 6. As a result, the number of electrical components of the IC cartridge 200 can be reduced and the IC cartridge 200 can be simplified and miniaturized. Thus, the part of the electrical components needed to add the wireless function are disposed in the smartphone 6 and, as a result, the IC cartridge 200 of the air cleaner 400, the floor heating device 500, the hot water supply system 600, and the humidity control device 700 can be made inexpensive and easy-to-handle.

### (33-7)

The air cleaner 400, the floor heating device 500, the hot water supply system 600, and the humidity control device 700 of the second to fifth embodiments respectively include the main body casings 410, 565, 650, and 720, and the metal members disposed therein. In one example, when the main body casings 410, 565, 650, and 720 are metal members, the outer lids 417, 557, 651, and 731 are formed from resin through which radio waves can pass. The connector 150 is disposed at a location such that, while the IC cartridge 200 is inserted into the connector 150, the distances from the antenna 230 to the metal members are at least 20 mm. Thus, with the air cleaner 400, the floor heating device 500, the hot water supply system 600, and the humidity control device 700, while the IC cartridge 200 is inserted into the connector 150, the distances from the antenna 230 to the metal members are at least 20 mm. As a result, it is possible to sufficiently suppress influences of the metal members on the radio waves sent and received by the antenna 230, which makes it easier to maintain a good condition of the radio waves to be sent and received.

### REFERENCE SIGNS LIST

- 1: Air conditioner
- 2: Indoor unit
- 2a, 410, 565, 650, 720: Main body casing
- 2e: Metal mounting plate (example of metal members)
- 3: Outdoor unit
- 5, 430, 580, 604, 605, 750: Remote controller
- 6: Smartphone
- 10: Refrigeration circuit
- 16: Indoor heat exchanger (example of metal members)
- 17: Copper piping (example of the metal members)
- 100, 490, 590, 690, 790: Electrical component section
- 150: Connector
- 190: Electrical component box (example of the metal members)
- 200, 200B: IC cartridge
- 203: Connection terminals
- 204: Uneven structure
- 210, 210B: Insulating case
- 211: First edge portion
- 212: Second edge portion
- 212a: Edge of second edge portion
- 220, 220B: Electric circuit
- 230: Antenna
- 250: Wireless IC chip
- 400: Air cleaner
- 500: Floor heating device
- 600: Hot water supply system
- 700: Humidity control device

### CITATION LIST

### PATENT LITERATURE

Patent Literature 1: Japanese Unexamined Patent Application Publication No. 2014-31957
Patent Literature 2: Japanese Unexamined Patent Application Publication No. 2015-31480
Patent Literature 3: Japanese Unexamined Patent Application Publication No. 2014-120964

## Claims

1. An IC cartridge (200, 200B) configured to add a wireless function by being attached to a connector (150, 150A, 150B) of an environment adjusting device (1, 400, 500, 600, 700) configured to adjust an indoor environment, the IC cartridge comprising:
an antenna (230) configured to send and receive wireless communication radio waves used to send and receive information used to adjust the indoor environment;
a wireless IC chip (250) configured to send and receive electrical signals to and from the antenna in order to send and receive radio waves via the antenna;
connection terminals (203) arranged and configured to be capable of insertion into and removal from the connector, the connection terminals being configured to circuit connect the connector to the wireless IC chip; and
an insulating case (210, 210B) covering an entirety of an electric circuit (220, 220B), including the wireless IC chip and the antenna but excluding the connection terminals;
the insulating case being housed in the environment adjusting device and supported by the environment adjusting device as a result of the connection terminals being inserted into the connector, and the insulating case being separated from the environment adjusting device as a result of the connection terminals being removed from the connector.

2. The IC cartridge according to claim 1, wherein the insulating case includes an insulating structure configured to extend a creepage distance around a periphery of the electric circuit.

3. The IC cartridge according to claim 2, wherein:
the insulating case has a first edge portion (211) where the connection terminals are disposed, and a second edge portion (212) opposite the first edge portion; and
the insulating case includes an uneven structure (204) on at least an inner surface between an edge of the second edge portion (211a) and the electric circuit, the uneven structure being the insulating structure.

4. The IC cartridge according to claim 3, wherein the antenna extends to a location proximal to the second edge portion, in a circuit region where the electric circuit is formed.

5. An environment adjusting device, comprising:
a main body casing (2a, 410, 565, 650, 720);
a connector (150) disposed in the main body casing; and
an IC cartridge including:
an antenna (230) configured to send and receive wireless communication radio waves used to send and receive information used to adjust an indoor environment;
a wireless IC chip (250) configured to send and receive electrical signals to and from the antenna in order to send and receive radio waves via the antenna;
connection terminals (203) as arranged and configured to be capable of insertion into and removal from the connector, the connection terminals being configured to circuit connect the connector to the wireless IC chip; and
an insulating case (210, 210B) covering an entirety of an electric circuit, including the wireless IC chip and the antenna but excluding the connection terminals;
the insulating case being housed in the main body and supported by the main body casing as a result of the connection terminals being inserted into the connector, and
the insulating case being separated from the main body casing as a result of the connection terminals being removed from the connector.

6. The environment adjusting device according to claim 5, further comprising:
an electrical component section (100, 490, 590, 690, 790) disposed in the main body casing, a plurality of electrical components being installed in the electrical component section; wherein
at least a part of the a plurality of electrical components that constitutes switch functions, display functions, and power supply functions of a wireless adapter that adds a wireless function is at least disposed in the electrical component section; and
while the IC cartridge is inserted into the connector, the IC cartridge is circuit connected to the electrical component section, and the IC cartridge and the electrical component section cooperate to demonstrate functions of the wireless adapter.

7. The environment adjusting device according to claim 5 or 6, further comprising:
an electrical component section (100, 490, 590, 690, 790) disposed in the main body casing, a plurality of electrical components being installed in the electrical component section; and
a remote controller (5, 430, 580, 604, 605, 750) configured to be capable of sending and receiving data to and from the electrical component section; wherein
at least a part of a plurality of electrical components that constitutes switch functions and display functions of a wireless adapter that adds a wireless function is disposed in the remote controller; and
while the IC cartridge is inserted into the connector, the IC cartridge is circuit connected to the electrical component section, and the IC cartridge, the electrical component section, and the remote controller cooperate to demonstrate functions of the wireless adapter.

8. The environment adjusting device according to any one of claims 5 to 7, further comprising:
an electrical component section (100, 490, 590, 690, 790) disposed in the main body casing, a plurality of electrical components being installed in the electrical component section; wherein
the IC cartridge is configured to be capable of sending and receiving data to and from a smartphone (6);
at least a part of a plurality of electrical components that constitutes switch functions and display functions of a wireless adapter that adds a wireless function is disposed in the smartphone; and
while the IC cartridge is inserted into the connector, the IC cartridge is circuit connected to the electrical component section, and the IC cartridge, the electrical component section, and the smartphone cooperate to demonstrate functions of the wireless adapter.

9. The environment adjusting device according to any one of claims 5 to 8, further comprising:
a metal member (16, 17, 190, 2e) disposed in the main body casing; wherein
the connector is disposed at a location where, while the IC cartridge is inserted into the connector, a distance from the antenna to the metal member is at least 20 mm.
